(19) Europäisches Patentamt
European Patent Office
Office européen des brevets

(11) EP 1 599 562 B1

(12) FASCICULE DE BREVET EUROPEEN

(45) Date de publication et mention de la délivrance du brevet:
**16.05.2007 Bulletin 2007/20**

(21) Numéro de dépôt: **04714813.5**

(22) Date de dépôt: **26.02.2004**

(51) Int Cl.:
***C09K 19/42*** (2006.01) ***C09K 19/44*** (2006.01)
***C09K 19/46*** (2006.01)

(86) Numéro de dépôt international:
**PCT/FR2004/000435**

(87) Numéro de publication internationale:
**WO 2004/077390 (10.09.2004 Gazette 2004/37)**

# (54) MELANGES CRISTAUX LIQUIDES NEMATIQUES POUR DISPOSITIFS D'AFFICHAGE BISTABLES

NEMATISCHE FLÜSSIGKRISTALLMISCHUNGEN FÜR BISTABILE FLÜSSIGKRISTALLANZEIGEVORRICHTUNGEN

NEMATIC LIQUID CRYSTAL MIXTURES FOR BISTABLE DISPLAY DEVICES

(84) Etats contractants désignés:
**AT BE BG CH CY CZ DE DK EE ES FI FR GB GR HU IE IT LI LU MC NL PT RO SE SI SK TR**

(30) Priorité: **26.02.2003 FR 0302332**

(43) Date de publication de la demande:
**30.11.2005 Bulletin 2005/48**

(73) Titulaire: **Nemoptic**
**78114 Magny-Les-Hameaux (FR)**

(72) Inventeurs:
- **DUBOIS, Jean-Claude**
  **F-78114 Magny-Les-Hameaux (FR)**
- **GALLAIRE, Didier**
  **F-91400 Orsay (FR)**
- **JOLY, Stéphane**
  **F-78280 Guyancourt (FR)**
- **DOZOV, Ivan, N.**
  **F-91190 Gif Sur Yvette (FR)**
- **MARTINOT-LAGARDE, Philippe**
  **F-91190 Gif Sur Yvette (FR)**
- **STOENESCU, Daniel, N.**
  **F-91400 Orsay (FR)**

(74) Mandataire: **Ahner, Francis et al**
**Cabinet Régimbeau**
**20, rue de Chazelles**
**75847 Paris cedex 17 (FR)**

(56) Documents cités:
**EP-A- 0 773 468**
**EP-A- 1 298 184**
**DE-A- 3 906 038**
**DE-A- 10 053 896**
**DE-A- 10 133 867**
**GB-A- 2 250 748**
**US-A- 4 450 094**
**US-A- 4 818 428**
**US-A- 4 886 621**
**US-A- 5 413 734**
**US-A1- 2002 003 226**
**US-A1- 2002 030 180**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention concerne l'utilisation de mélanges cristaux liquides nématiques de faible ancrage zénithal destinés à optimiser les caractéristiques des dispositifs utilisant la cassure de cet ancrage et notamment les dispositifs de visualisation bistables.

## ETAT DE L'ART

Les dispositifs d'affichage à cristaux liquides (LCD) sont utilisés de plus en plus dans les applications d'affichage avec des contraintes de volume, de poids ou de consommation électrique. On les retrouve donc dans toutes sortes d'applications mobiles, par exemple les ordinateurs portables, les livres électroniques, les assistants personnels et les téléphones portables.

### 1) L'ancrage des molécules dans les afficheurs "classiques".

Dans leur forme la plus simple, les dispositifs d'affichage commandés électriquement comprennent un matériau cristal liquide confiné entre deux plaques dont l'une au moins est transparente. Chacune de ces plaques est munie sur sa face interne d'une électrode et a été soumise à un traitement superficiel qui oriente le cristal liquide. On dit que ce traitement réalise l'ancrage des molécules sur les parois de la cellule. En appliquant entre les électrodes des deux plaques une différence de potentiel supérieure à une tension appelée tension seuil de Fréedericksz, l'orientation du cristal liquide varie sous l'action du champ électrique. A cause de l'anisotropie optique du cristal liquide, ces variations d'orientation changent les propriétés optiques de l'afficheur suivant l'amplitude du champ appliqué.
Tous ces afficheurs, dits *"classiques",* ont une caractéristique commune : à la coupure du champ électrique externe, l'information affichée disparaît plus ou moins vite. L'ancrage est fort, il fixe l'orientation des molécules près des plaques, et les maintient quasi parallèles à ces dernières pendant l'application du champ. À l'arrêt de celui-ci, ces molécules figées réorientent les autres selon la texture d'équilibre. L'élasticité du cristal liquide aidée par l'ancrage fort des molécules sur les plaques fait disparaître la déformation que le champ avait créée, donc toute information.
Un très important travail a été réalisé pour améliorer les performances de ces afficheurs *classiques,* en optimisant les propriétés physiques du cristal liquide : gamme de température, viscosité, élasticité, biréfringence, anisotropie diélectrique, tension seuil de Fréedericksz, etc. Il est pratiquement impossible pour un produit pur de remplir toutes les exigences. Pour cette raison, dans les dispositifs d'affichage, des mélanges comprenant plus d'une dizaine de composants sont généralement utilisés, pour optimiser l'ensemble des propriétés *"de volume"* du cristal liquide [Handbook of Liquid Crystals (1998) Wiley-VCH Weinheim]
Par ailleurs, pour ces *dispositifs classiques,* la condition sur l'ancrage n'est pas très stricte, il suffit que celui-ci soit "fort" c'est à dire supérieur à une valeur limite ( $L_z < 15$ nm selon la définition rappelée ci-après). Ce problème de l'obtention d'ancrage fort a fait l'objet de recherches mais peut être considéré comme pratiquement résolu maintenant. Plusieurs familles de polymères connus disposés en couche superficielle sur les plaques assurent un ancrage fort adapté aux afficheurs classiques [Liquid Crystals - Applications and Uses (1990) World Scientific Publishing Co. Pte. Ltd Singapore].

### 2) Les afficheurs nématiques bistables.

Une nouvelle génération d'afficheurs nématiques, dits *"bistables",* est apparue depuis quelques années : ils fonctionnent par commutation entre deux états stables en l'absence dé champ. Le champ électrique externe n'est appliqué que pendant le temps nécessaire pour faire commuter d'un état à l'autre la texture du cristal liquide. En l'absence de signal électrique de commande, l'afficheur reste en l'état. Par son principe de fonctionnement, ce type d'afficheur consomme une énergie proportionnelle au nombre de changements d'images ; ainsi, quand leur fréquence diminue, la puissance nécessaire pour le fonctionnement de l'afficheur tend vers zéro. Ce type d'afficheur se développe rapidement en raison de l'expansion du marché des dispositifs mobiles.

### 3) Les afficheurs bistables à cassure d'ancrage.

Plusieurs types d'afficheurs bistables demandent que les molécules de cristal liquide puissent changer d'orientation au voisinage des plaques et passer facilement de parallèles ou quasi parallèles à perpendiculaires ou quasi perpendiculaires à celles-ci. Celui que développe la société ZBD Displays Ltd. (G. P. Bryan-Brown et al. Nature, **399**, 338 (1999)), est typique : dans l'un des états bistables, les molécules au voisinage d'une plaque lui sont en moyenne parallèles ; dans l'autre, elles lui sont perpendiculaires. La commutation demande le passage facile entre ces deux états. Pour d'autres afficheurs, pendant la commutation, le champ électrique fait passer les molécules proches de l'une ou de

chacune des deux plaques du dispositif de quasi parallèles à pratiquement perpendiculaires à ces dernières. On dit que ces dispositifs commutent par cassure de l'ancrage.

Deux afficheurs nématiques bistables à cassure d'ancrage utilisant des surfaces bistables ont été proposés par le Laboratoire de Physique des Solides d'Orsay, l'un sélectionne l'état stable après commutation par un effet flexoélectrique (demande de brevet FR 90 07847), l'autre, par un effet électro-chiral (demande de brevet FR 90 01066).

Deux afficheurs nématiques bistables à cassure d'ancrage sur des surfaces monostables sont développés actuellement : l'afficheur *BINEM®* développé par la société NEMOPTIC en France (demandes de brevets FR 95 13201 et FR 96 04447 et brevet US 6 327 017) ou l'afficheur *SBiND* développé par la société LICET en Italie (demande de brevets EP 0 773 468, brevet US 5 995 173 et demande de brevet JP 9 274 205).

En particulier, la demande de brevet EP 0 773 468 décrit un dispositif d'affichage bistable à base de cristaux liquides nématiques, le matériau cristal liquide nématique utilisé étant le 5 CB pentylcyanobiphényl.

La commutation par cassure d'ancrage de l'afficheur bistable BINEM® est présenté schématiquement sur la figure 1 ; il utilise deux textures, l'une uniforme ou faiblement tordue $T_0$ dans laquelle les molécules sont sensiblement parallèles entre elles et l'autre $T_{I\varepsilon 0}$ qui diffère de la première par une torsion de +/- 180°. Le nématique est chiralisé avec un pas spontané $p_0$, choisi proche de quatre fois l'épaisseur de la cellule, pour égaliser les énergies des deux textures. Sans champ, ce sont les états d'énergie minimale : la cellule est bistable. Sous fort champ, une texture presque homéotrope (H) est obtenue, l'ancrage des molécules est cassé au moins sur l'une des plaques : les molécules voisines lui sont normales. A la fin de l'impulsion de commande, la cellule revient vers l'une ou l'autre des textures, selon la vitesse de retour à l'équilibre des molécules près de la surface dont l'ancrage n'était pas cassé. Un retour lent donne l'état $T_0$ par couplage élastique entre les molécules près des deux surfaces, un retour rapide donne l'état $T_{180°}$ par couplage hydrodynamique.

### 4) Les mélanges nématiques pour afficheurs à cassure d'ancrage.

Les afficheurs à cassure d'ancrage que nous venons de citer et généralement tous les afficheurs bistables utilisant une commutation sur la surface, demandent sur celle-ci un ancrage zénithal du cristal liquide faible et bien défini. Les molécules sur les plaques peuvent alors se dresser sous l'action d'un champ de cassure raisonnable, compatible avec les circuits de commande. Rappelons que le champ de cassure qui dresse les molécules accrochées aux surfaces est évidemment supérieur au champ correspondant à la tension seuil de Fréedericksz : celui-ci ne fait tourner les molécules qu'au centre des cellules, il ne change pratiquement pas l'orientation de celles près des plaques. Le fonctionnement des afficheurs à cassure d'ancrage dépend fortement des propriétés *"de surface"* du mélange nématique. Ces propriétés physiques (angles et force d'ancrage) caractérisent l'interaction du cristal liquide avec le substrat d'alignement.

Les cristaux liquides utilisés par les promoteurs des afficheurs nématiques bistables sont souvent de la famille des cyanobiphényles, ils ne permettent pas de réaliser des dispositifs fonctionnant dans une large gamme de température. De plus, l'ancrage faible est souvent obtenu sur des plaques recouvertes de matériaux minéraux déposés par évaporation, procédé beaucoup plus coûteux que les traitements polymères usuels. Les matériaux habituels et les traitements de surface industriels utilisés pour les afficheurs classiques donnent des ancrages très forts et sont inutilisables directement pour les afficheurs bistables.

La réalisation d'afficheurs bistables pour applications pratiques, industrielles ou grand public, demande des mélanges cristaux liquides qui présentent une propriété nouvelle : un ancrage zénithal faible. Il faut de plus qu'ils gardent les propriétés de volume plus classiques mais indispensables : ils doivent rester nématiques dans une large gamme de température et leurs propriétés mécaniques, électriques et optiques doivent pouvoir s'ajuster selon les besoins des différents afficheurs bistables.

### a) Les propriétés de volume nécessaires

Les propriétés de volume des matériaux cristaux liquides adaptés aux afficheurs bistables sont rappelées ci-dessous.

Généralement, les produits purs sont nématiques dans une plage de température restreinte. Cette plage $\Delta T_N$ est limitée vers les hautes températures par $T_{N-I}$, la température de transition cristal liquide nématique↔liquide isotrope et vers les basses températures par $T_{X-N}$, la température de transition vers des phases cristal liquide plus ordonnées ou des phases solides vitreuses ou cristallines.

$$\Delta T_N = T_{N-I} - T_{X-N}.$$

Pour la plupart des applications, une large plage de température est nécessaire, typiquement de l'ordre de 50°C à 80°C centrée sur la température ambiante (20°C). Afin d'optimiser le domaine de température, les matériaux cristaux liquides utilisés doivent être constitués de plusieurs composants, choisis dans des familles chimiques qui présentent des plages nématiques suffisamment décalées en température et dont la répartition des longueurs moléculaires gêne la cristallisation. Pratiquement, le nombre des composants peut atteindre la douzaine pour ajuster les différentes propriétés de volume du mélange tout en donnant la gamme de température désirée.

Un bon contraste optique de l'afficheur demande une biréfringence du mélange bien définie. Dans le cas des afficheurs bistables par cassure d'ancrage, l'épaisseur de la cellule est faible: il faudra des mélanges de forte biréfringence ($\Delta n$ = 0,15 à 0,2). Le mélange devra comporter une forte proportion de matériaux très anisotropes. La valeur de la biréfringence est critique mais son ajustement est facile car les biréfringences des différents composants du mélange s'ajoutent proportionnellement à leurs concentrations.

Le temps de commutation de l'afficheur est proportionnel à la viscosité du matériau et inversement proportionnel à ses élasticités. Dans les mélanges on sait que des matériaux très anisotropes donnent de fortes constantes élastiques, mais aussi une forte viscosité. Celle du mélange peut être abaissée par des additifs de faible anisotropie, peu visqueux qui gênent la dimérisation des matériaux anisotropes. Ceci sera indispensable pour obtenir à basse température les temps de réponse de quelques millisecondes nécessaires pour les applications.

Ainsi les cristaux liquides nématiques pour afficheurs à cassure d'ancrage devront être des mélanges composés de plusieurs matériaux mésomorphes : c'est la seule méthode connue pour obtenir les différentes propriétés de volume nécessaires. Il faut que leur diversité ne nuise pas à la propriété nouvelle indispensable : l'ancrage zénithal faible. De plus pour certaines applications, en particulier dans le cas de matériaux pour les afficheurs BINEM®, il sera nécessaire d'ajouter au mélange un additif chiral pour obtenir une bistabilité infinie.

**b) Définition pratique d'un ancrage zénithal faible.**

Les notions d'ancrage et de cassure de l'ancrage des molécules de cristal liquide sur les surfaces sont très techniques, on peut les préciser. L'orientation des molécules de cristal liquide par les surfaces porte le nom d'ancrage. La source de l'ancrage est l'anisotropie de l'interaction entre le cristal liquide et la surface. On peut caractériser l'ancrage par son efficacité et par la direction préférentielle imposée par la surface aux molécules de cristal liquide voisines. Cette direction, nommée axe facile, est définie par l'angle azimutal $\varphi_o$ et l'angle zénithal $\theta_o$, (voir figure 2) Le directeur nématique, c'est-à-dire la direction moyenne des molécules de cristal liquide, est attiré vers l'axe facile par la surface. En l'absence d'influence externe, les molécules du cristal liquide s'orientent parallèlement à l'axe facile pour minimiser l'énergie d'interaction avec la surface. Cette énergie (énergie d'ancrage) peut s'écrire en première approximation (A. Rapini and M. Papoular, *J. Phys. (Fr)* C4, **30**, 54-56 (1969)) :

$$g(\theta,\varphi)=\frac{W_z}{2}\sin^2(\theta-\theta_0)+\frac{W_a}{2}\sin^2(\varphi-\varphi_0) \qquad (1)$$

où $\theta$ et $\varphi$ sont l'angle zénithal et l'angle azimutal des molécules sur la surface, $W_z$ et $W_a$ sont les densités surfaciques d'énergie d'ancrage zénithal et azimutal. Nous les appellerons pour simplifier énergies d'ancrage. Sur la plupart des surfaces solides, l'énergie d'ancrage zénithal est d'un à deux ordres de grandeur plus élevée que l'azimutal. Cette dernière est principalement fonction de l'anisotropie induite sur la surface par les traitements, pour elle, la nature des matériaux est moins importante. Nous nous intéresserons uniquement ici à l'énergie d'ancrage zénithal $W_z$.

Si l'orientation des molécules dans le volume est différente de la direction de l'axe facile, la texture est déformée. L'énergie de surface n'est plus nulle et il apparaît aussi une énergie de volume, caractérisée par un coefficient d'élasticité $K$ qui dépend de la déformation. On peut caractériser l'énergie de surface par sa longueur d'extrapolation : rapport entre le coefficient d'élasticité de volume et l'énergie d'ancrage. On note $L_z=K_{33}/W_z$ la longueur d'extrapolation de l'ancrage zénithal. En pratique un ancrage zénithal est considéré comme fort si $L_z$ < 15 nm et faible si $L_z$ > 25 nm

L'orientation des molécules de cristal liquide peut être modifiée grâce aux champs externes, électriques ou magnétiques. Par exemple, pour un champ électrique normal à la surface, les molécules d'anisotropie positive s'orientent selon le champ ($\theta$= 0°) dans la masse d'une cellule où, sans champ, elles étaient à plat ($\theta \cong$ 90°). Sur la surface l'angle zénithal diminue continûment en fonction du champ et pour un champ supérieur au champ critique $E_c$, $\theta$ devient nul. On dit que l'ancrage est cassé, car les molécules près de la surface ne subissent plus ni couple d'ancrage, ni couple électrique. Le champ critique est:

$$E_C = \frac{W_z}{\sqrt{K_{33}\,\Delta\varepsilon}} \qquad (2)$$

où $W_z$ est l'énergie d'ancrage zénithal, $K_{33}$ le coefficient d'élasticité de flexion et $\Delta\varepsilon$ l'anisotropie diélectrique.

Ce champ critique est celui qui devra être appliqué pour obtenir la commutation des dispositifs à cassure d'ancrage. C'est aussi l'ordre de grandeur du champ nécessaire pour faire changer l'orientation des molécules près des surfaces dans le cas de dispositifs où la cassure n'est pas nécessaire. Pour obtenir un champ de commande du dispositif compatible avec l'électronique de commande il faut des mélanges à fort $\Delta\varepsilon$ et forte élasticité, mais faible énergie d'ancrage.

Pratiquement, la grandeur utile dans le cas des afficheurs à cassure d'ancrage est la tension nécessaire pour casser celui-ci, donc le champ critique multiplié par l'épaisseur de la cellule. Les cellules des afficheurs bistables ont habituellement une épaisseur telle que leur biréfringence est égale à la demi longueur d'onde de la lumière au centre de leur bande passante. Pour caractériser l'ancrage zénithal, nous donnerons la tension $U_{\lambda/2}$, tension aux bornes d'une cellule de biréfringence $\lambda/2$ pour la raie jaune du sodium, quand le champ près de la surface est le champ critique de cassure de l'ancrage :

$$U_{\lambda/2} = \frac{\lambda W_z}{2\Delta n\sqrt{K_{33}\,\Delta\varepsilon}} = \frac{\lambda}{2\Delta n L_z}\sqrt{\frac{K_{33}}{\Delta\varepsilon}} \qquad (3)$$

Dans cette relation, $\lambda$ = 589 nm est la longueur d'onde du sodium, $W_z$, $L_z$, $\Delta n$, $K_{33}$ et $\Delta\varepsilon$, sont les paramètres du mélange cristal liquide, respectivement son énergie d'ancrage zénithal, sa longueur d'extrapolation d'ancrage zénithal, sa biréfringence pour la raie du sodium, sa constante d'élasticité de flexion et son anisotropie diélectrique.

Les inventeurs considèrent que l'ancrage zénithal est faible quand la tension de cassure $U_{\lambda/2}$ peut être fournie, dans la gamme de température, par des circuits électroniques bon marché. Cela se traduit pratiquement actuellement par la règle empirique : l'ancrage est faible si $U_{\lambda/2} < 25$ volts.

**c) Critère de l'influence du matériau cristal liquide sur l'ancrage.**

L'énergie d'ancrage zénithal dépend des traitements et de la nature de la surface, de la température et du matériau cristal liquide employé. Les inventeurs ont étudié l'influence du matériau sur l'ancrage zénithal en s'affranchissant le plus possible des autres paramètres.

Les surfaces utilisées pratiquement dans les cellules cristal liquide assurent aussi un ancrage azimutal non nul. En effet, la plupart des applications demandent que la direction azimutale des molécules sur chacune des plaques soit bien définie pour que la texture ait les propriétés optiques escomptées. Industriellement, cet ancrage azimutal est obtenu par brossage du film de polymère recouvrant la plaque. Les inventeurs ont découvert que l'influence du brossage sur l'ancrage zénithal peut être négligé en première approximation.

La nature de la surface peut faire varier d'un ordre de grandeur l'énergie d'ancrage zénithal. NEMOPTIC a développé des films de copolymère de polychlorure de vinyle (demande de brevet FR 00 16135) sur lesquels l'ancrage zénithal du pentyl-cyanobiphényle (5CB) est faible ($L_z > 25$ nm à +20°C). En revanche, les polyimides, utilisés dans les afficheurs classiques, assurent des ancrages zénithaux forts. Par exemple, sur un film d'orientation polyimide commercial (Nissan SE140), le 5CB a un ancrage zénithal très fort ($L_z \cong 7$ nm à +20°C). Cependant les inventeurs ont montré que, généralement les surfaces qui donnent l'ancrage le plus faible pour un cristal liquide sont celles qui vont assurer l'ancrage le plus faible pour beaucoup d'autres cristaux liquides. Pour minimiser l'effet de la nature de la surface, les inventeurs ont choisi deux surfaces de nature très différentes comme standards et ils ont testé l'énergie d'ancrage zénithal des cristaux liquides étudiés sur ces deux surfaces. Ces surfaces ont été choisies parmi celles sur lesquelles l'énergie d'ancrage du 5CB est faible : un film de monoxyde de silicium (SiO) évaporé obliquement sous vide et un film de polymère brossé.

Le film de SiO est obtenu par évaporation à 75°, son épaisseur est de 6 nm, il assure à 20°C un ancrage zénithal faible du 5CB ($L_z$ = 31,3 nm, ce qui donne selon l'équation (3), $U_{\lambda/2}$= 14 volts).

Le film de polymère brossé est noté BP11, c'est un film de copolymère de polychlorure de vinyle préparé d'après le procédé décrit dans la demande de brevet FR 00 16135. Il assure à 20°C un ancrage zénithal faible du 5CB ($L_z$ = 27,5 nm donc $U_{\lambda/2}$= 16 volts).

Quand la température baisse, l'énergie d'ancrage augmente pour tous les couples surface-cristal liquide. Ce comportement s'explique par le renforcement à basse température de l'ordre nématique, ordre qui se transmet jusqu'à

la surface. Le graphique de la figure 3 présente le champ critique de cassure $E_C$ du nématique 5CB sur nos deux surfaces de référence, en fonction de la biréfringence $\Delta$n, qui est proportionnelle au paramètre d'ordre *(S).* On observe que les seuils de cassure dépendent plus fortement de l'ordre nématique sur le polymère que sur le monoxyde de silicium. Le paramètre $\alpha$ de l'approximation $E_c \sim S^\alpha$ a des valeurs proches de 4 (4,36$\pm$0,15) pour le polymère brossé et de 2 (2,15$\pm$0,1) pour le monoxyde de silicium. Pour permettre des comparaisons, les mesures seront faites à la même température réduite: $T_{red} = (T_{N-1}-T) / T_{N-1}$ = 0,9 *(T* est la température Kelvin de mesure, $T_{N-1}$ est celle de la transition nématique isotrope).

Les inventeurs ont choisi comme critère comparatif de l'ancrage zénithal d'un matériau la valeur de la tension de cassure $U_{\lambda/2}$ à la température réduite 0,9 sur les deux surfaces qu'ils ont prises comme standard. En ce qui suit, l'ancrage zénithal sera considéré comme faible quand $U_{\lambda/2}$ sera inférieure à 25V.

**TRAVAIL PRELIMINAIRE DES INVENTEURS**

**1) Étude des mélanges commerciaux.**

En utilisant le critère défini ci-dessus, les inventeurs, ont montré que la plupart des mélanges cristaux liquides commerciaux présentent un ancrage fort ; ils ne sont donc pas utilisables pour réaliser des afficheurs bistables nématiques à cassure d'ancrage.

Le Tableau 1 présente la tension critique et la longueur d'extrapolation pour différents produits commerciaux (MERCK) sur un film de monoxyde de silicium. Les mesures ont été réalisées à la température réduite $T_{red}$= 0,9.

Tableau 1

| Produits | Tension de cassure de cellules $\lambda$/2: $U_{\lambda/2}$/volts | Longueur d'extrapolation: $L_z$/nm |
|---|---|---|
| MLC-6650 | 35,5 | 10,7 |
| MLC-6806-100 | 37,7 | 16,5 |
| ZLI-1083 | 42,9 | 15,5 |
| ZLI-1132 | 51,0 | 13 |
| MLC-6809-000 | 53,5 | 14,2 |
| ZLI-1115 | 60,7 | 13 |
| MLC-6686 | 60,8 | 15 |
| MLC-6846-000 | 73,0 | 14 |
| MLC-4822 | 84,5 | 9,7 |
| MLC-6848-100 | 86,0 | 7,6 |
| MLC-13300-000 | 90,8 | 10 |
| MLC-6546-100 | 95,2 | 8,2 |
| MLC-6012 | 104,7 | 10,3 |
| MLC-6848-000 | 108,2 | 7,2 |
| MLC-6625 | > 119 | <14 |
| MLC-6849-100 | > 120 | 7,0 |
| MLC-12000-100 | >137 | <10 |
| MLC-5051 | 213 | 7,4 |

On peut voir que l'ancrage de tous ces mélanges est fort malgré leur forte anisotropie diélectrique car leur tension critique de cassure $U_{\lambda/2}$ est supérieure à 30 volts.

**2) Étude des corps purs. Mélanges simples**

Pour réaliser des mélanges adaptés aux afficheurs bistables, les inventeurs ont repris l'étude à la base en mesurant l'ancrage des corps purs nématiques. Ils ont pu sélectionner des familles de composés présentant des ancrages

zénithaux faibles.

A partir de ces résultats, il est malheureusement difficile de prévoir les propriétés des mélanges. A ce jour, les lois de la variation de l'énergie d'ancrage de mélanges nématiques en fonction de l'énergie d'ancrage et de la concentration de chacun de ses composants ne sont pas connues. En effet dans ce problème le paramètre important est la valeur des concentrations des différents composants au voisinage de la surface. Ces concentrations peuvent être très différentes de celles dans le volume par suite du phénomène de ségrégation. Cependant les inventeurs ont pu dégager quelques tendances générales en étudiant des mélanges binaires, ternaires ou plus complexes de matériaux dont ils avaient déterminé les énergies d'ancrage.

Le plus souvent, dans une famille de composés donnée, donc pour des matériaux de formules chimiques proches, ne différant que par la longueur de chaînes alkyles terminales, les énergies d'ancrage varient peu d'un matériau à l'autre. Quand on mélange ces matériaux, l'énergie d'ancrage du mélange est la moyenne pondérée des énergies d'ancrage des constituants du mélange.

Il existe quelques familles avec lesquelles on peut réaliser des mélanges mixtes. La loi simple de la moyenne pondérée peut rester valable pour des mélanges comportant des matériaux choisis dans deux familles de ce type. Par exemple, il est possible de réunir des cyanobiphényles et des cyanophénylbenzoates pour obtenir des mélanges dont l'énergie d'ancrage est faible et proportionnelle aux concentrations des composés. **a) Les "poisons"**

Les inventeurs ont découvert que certains produits, ajoutés même en faible quantité dans le mélange nématique, renforcent énormément l'ancrage zénithal. Ces produits sont de vrais *"poisons"* pour un mélange destiné à un afficheur à cassure d'ancrage. Pour ces produits, l'ancrage dépend de la concentration du *"poison"* selon une loi très fortement non linéaire. Le tableau 2 montre la tension critique de cassure du pentylcyanobiphényle et celle de celui-ci dopé par ~20% de différents *"poisons"*. Les mesures sont faites selon le critère défini précédemment : à la température réduite $T_{red}$=0,9 sur des cellules planaires de retard optique λ/2.

Tableau 2:

| Exemples de *"poisons":* produits nématiques qui ajoutés au nématique de référence (5CB) augmentent fortement la tension de cassure $U_{\lambda/2}$ | | | |
|---|---|---|---|
| Concentration en poison en (% en poids dans le 5CB) | Produit nématique (5CB + poison) | $T_{N-1}$/°C | $U_{\lambda/2}$ /volts à $T_{red}$=0.9 |
| référence | 4-pentyl-4'-cyanobiphényle (5CB pur) | +35,0 | 14 |
| 20% | 5CB + 4-trans-propylcyclohexylcyanobenzène | +377 | 20 |
| 20 % | 5CB + 4-pentyl -4'-cyanobicyclohexane | +44,6 | 26 |
| 20% | 5CB+ 4-propylcyclohexyl-4'-thiocyanobenzène | +363. | 37 |
| 20 % | 5CB + 4-cyanobiphényl-4'-pentylcyclohexane | +72,0 | > 40 |

Les inventeurs ont trouvé que les matériaux de même famille chimique que les "poisons" du tableau 2 renforcent aussi l'ancrage. Ils ne doivent apparaître qu'en faible proportion dans les mélanges pour afficheurs bistables.

Plus généralement, les poisons présentent des caractéristiques communes, ce qui a permis de réaliser des corrélations entre leur structure moléculaire et les propriétés d'ancrage. Les inventeurs ont pu ainsi découvrir plusieurs classes de matériaux qui augmentent l'ancrage et qui ne doivent être présents qu'en faible quantité, voire qui sont à éviter dans les mélanges pour afficheurs nématiques bistables.

Les produits appartenant aux classes DI et DII sont déconseillés. Ils ont pour formules:

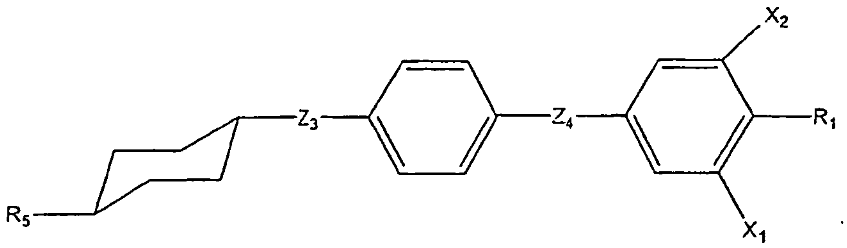

DI

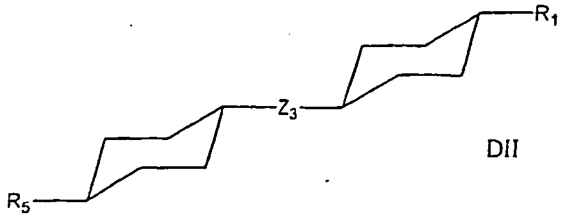

DII

où :

- $R_1$ est un groupement polaire -CN, -NCS, -F ou -$CF_3$,
- $R_5$ est un groupement R- ou RCOO-, où R représente une chaîne alkyle de 1 à 12 atomes de carbone,
- $Z_3$ et $Z_4$ identiques ou différents, sont des groupements -C≡C-, -$CH_2$-$CH_2$-, ou de simples liaisons, et
- $X_1$ et $X_2$ identiques ou différents, sont des atomes de fluor, de chlore ou d'hydrogène.

Les inventeurs ont montré que ces matériaux sont des "poisons" pour l'ancrage zénithal faible. Pour que les mélanges présentent cette propriété d'ancrage, il faut qu'ils ne contiennent qu'une très faible proportion de composés de cette classe, de préférence moins d'environ 5% en masse.

Les produits appartenant aux classes CI et CII renforcent moins l'ancrage mais sont aussi à éviter. Ils ont pour formules:

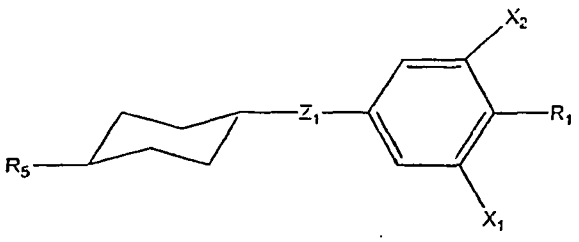

CI

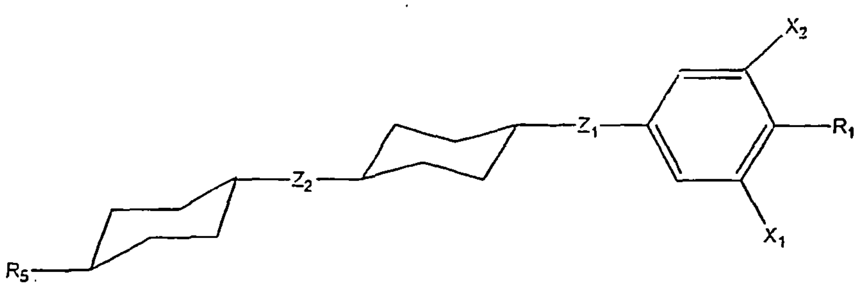

CII

où

- $R_1$ est un groupement polaire -CN, -NCS, -F ou -$CF_3$,
- $R_5$ est un groupement R- ou RCOO-, où R représente une chaîne alkyle de 1 à 12 atomes de carbone,

$Z_1$ et $Z_2$ identiques ou différents, sont des groupements -C≡C-, -$CH_2$-$CH_2$-,-COO-, -OCO- ou de simples liaisons, et $X_1$ et $X_2$ identiques ou différents, sont des atomes de fluor, de chlore ou d'hydrogène.

Pour que les mélanges gardent un ancrage zénithal faible, il faut qu'ils ne contiennent qu'une très faible proportion de composés de ces classes, de préférence moins de 20% en masse, ou même pas du tout.

Les inventeurs ont montré que tous ces matériaux sont des "poisons" pour l'ancrage zénithal faible. Il faut cependant faire remarquer qu'ils possèdent quelques propriétés intéressantes : en plus du fait qu'ils élargissent la gamme de température du mélange, ils ont tous des groupes polaires terminaux, ce qui permet un fort couplage avec le champ. Ils sont parfois peu visqueux et augmentent alors la vitesse de commutation.

**b) Les produits favorables, indispensables**

A l'inverse, les inventeurs ont découvert des produits favorables qui peuvent diminuer l'énergie d'ancrage zénithal d'un mélange, parfois d'une façon fortement non-linéaire. Une faible concentration peut être suffisante pour baisser notablement l'énergie. Le tableau 3 donne la tension critique de cassure du pentyl-cyanobiphényle et celle de celui-ci dopé par ~20% de ces matériaux. Les mesures sont faites à la température réduite $T_{red}$=0,9 sur des cellules planaires de retard optique λ/2.

Tableau 3:

| Exemples de produits nématiques qui ajoutés au nématique de référence (5CB) diminuent la tension de cassure ($U_{\lambda/2}$). Produits favorables. | | | |
|---|---|---|---|
| Concentration (% en poids dans le 5CB) | Produit nématique (5CB + additif) | $T_{N-I}$/°C | $U_{\lambda/2}$/volts à $T_{red}$=0.9 |
| référence | 4-pentyl-4'-cyanobiphényle (5CBpur) | +35,0 | 14 |
| 19 % | 5CB+ 4-butylphényl-4'-propylphényl-éthyne | +38,3 | 10 |
| 20% | 5CB+ 4-pentyl-4'-cyanoterphényle | +73,5 | 11 |
| 20% | 5CB + 3-fluoro-4-cyanophényl-4'-pentylbenzoate | +30,8 | 12 |
| 19% | 5CB + 5-pentyl-(1,3-dioxane)-4'-cyanophényle | +37,5 | 12 |
| 20 % | 5CB+1-éthyl-4-propylcyclohexylbenzène | +14,5 | 13 |
| 20% | 5CB+ 4-butyl-4'-thiocyanobiphényle | +32,5 | 13,5 |

Les inventeurs ont trouvé que les matériaux de mêmes familles chimiques que les produits favorables donnés en exemple dans le tableau 3 sont aussi favorables. A partir de ces résultats, ils ont découvert plusieurs classes de matériaux qui ont des ancrages faibles et peuvent se mélanger ; ils ont pour formules:

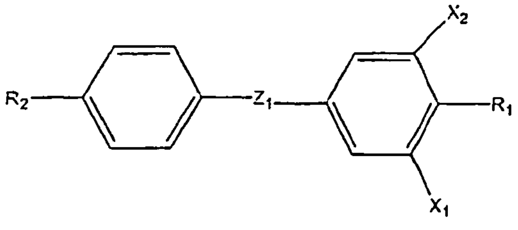

AI

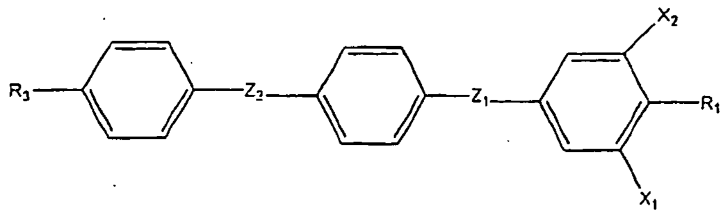

AII

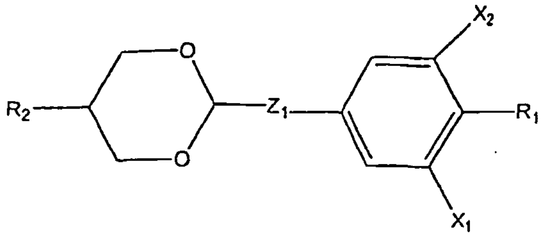

AIII

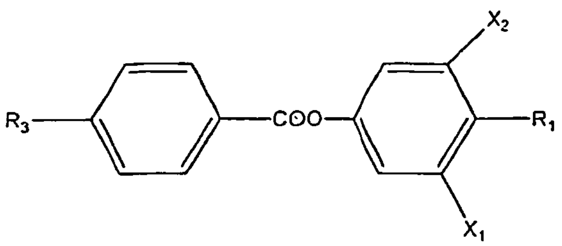

AIV

où :

$R_1$ est un groupement polaire -CN, -NCS, -F ou $-CF_3$,
$R_2$ est un groupement R-, RO- ou RCOO-, où R représente une chaîne alkyle de 1 à 12 atomes de carbone,
$R_3$ est un groupement R-, RO- ou RCOO-, où R représente une chaîne alkyle de 1 à 12 atomes de carbone ou un radical cycloaliphatique portant éventuellement une chaîne alkyle de 1 à 12 atomes de carbone,
$Z_1$ et $Z_2$ identiques ou différents, sont des groupements -C≡C-, $-CH_2-CH_2-$, -COO-, -OCO- ou de simples liaisons,
et $X_1$ et $X_2$ identiques ou différents, sont des atomes de fluor, de chlore ou d'hydrogène.

La classe AI englobe la famille des cyano-biphényles, les matériaux qui ont permis de démontrer la faisabilité de plusieurs afficheurs bistables. Tous les composants appartenant à la classe AI possèdent des molécules à deux cycles et avec très peu d'exceptions (quelques tolanes par exemple), des températures de transition nématique isotrope inférieures à +50°C. Il est, par conséquent, difficile de réaliser un mélange optimisé à partir uniquement des produits AI. Les mélanges ne comportant que cette classe présentent tous des ancrages faibles et un bon couplage avec le champ mais leurs gammes de température sont insuffisantes pour les applications pratiques.

Par exemple, l'ajout de heptyl-cyanobiphényle à 41% dans le pentyl-cyanobiphényle augmente la plage nématique ($T_{X-N}$ = -2°C et $T_{N-1}$ = +37,5°C) sans pratiquement changer la tension de cassure ($U_{\lambda/2}$ = 14,7 V à $T_{red}$ = 0,9). La température de transition $T_{N-1}$ reste inférieure à 50°C ; elle est donc trop basse pour la plupart des applications.

Un autre exemple, l'ajout de butyl-thiocyanobyphényle à 30% augmente la plage du pentyl-cyanobiphényle ($T_{X-N}$ = +15°C et $T_{N-1}$= +31°C) tout en baissant les seuils de cassure d'ancrage ($U_{\lambda/2}$ = 13,5 V à $T_{red}$ = 0,9). Le mélange binaire ainsi réalisé a un ancrage plus faible que celui des cyanobiphényles mais sa température de transition $T_{N-1}$ reste toujours inférieure à 50°C.

La classe AII comporte des molécules plus longues (à trois ou quatre cycles) ; leur plage nématique est située au dessus de 100°C. Leur apport dans un mélange comportant les composants de la classe AI permet d'étendre la gamme nématique vers les températures plus élevées en augmentant la température de transition $T_{N-1}$ sans changer, ou même en abaissant, l'énergie d'ancrage. Le mélange de pentyl-cyanobiphényle et pentyl-cyanoterphényle (à 20%) en est un exemple: $T_{X-N}$ = +5°C, $T_{N-I}$ = +73,5 °C, et $U_{\lambda/2}$ = 11 V à $T_{red}$ = 0,9.

La classe AIII est formée par les phenyl-dioxanes, ils ont des propriétés très proches de celles des matériaux de la classe AI. Ils sont polaires comme eux et leur plage nématique est située autour de la température ambiante.

Cependant, leur anisotropie optique est nettement plus faible que celle des matériaux de la classe AI. Ils permettent ainsi d'ajuster la biréfringence du mélange, sans changer les autres propriétés. Une valeur typique pour la biréfringence d'un cyanophényl-dioxane est 0,09, contre 0,18 pour un cyanobiphényle. Le seuil de cassure d'un mélange en proportions égales de 5-propyl-(1,3-dioxane)-4'-cyanophényle et de 5-pentyl-(1,3-dioxane)-4'-cyanophényle ($T_{X-N}$ = +20°C, $T_{N-1}$ = +42°C) est $U_{\lambda/2}$ = 20V à $T_{red}$ = 0,9. Remarquons que l'épaisseur optimale de l'afficheur pour ce mélange à faible biréfringence est deux fois plus grande que dans le cas du cyano-biphényle. La tension de cassure pour une cellule de même épaisseur que pour le cyano-biphényle serait de 10V.

Les molécules des matériaux de la classe AIV peuvent comporter deux ou trois cycles. La gamme de température varie beaucoup d'une famille à l'autre de cette classe. Des mélanges comportant uniquement des matériaux de cette classe ont des plages de température larges.

Ces matériaux sont très polaires et leur anisotropie diélectrique peut atteindre $3.10^{-10}$F/m. Leur couplage avec le champ électrique est ainsi très fort, ce qui baisse les valeurs des champs de cassure. Par exemple un mélange de 3-fluoro-4-cyanophényl-4'-ethyl-benzoate à 18%, 3-fluoro-4-cyanophényl-4'-butyl-benzoate à 36%, 3-fluoro-4-cyanophényl-4'-pentyl-benzoate à 18% et 3-fluoro-4-cyanophényl-4'-trans-pentyl-cyclohexyl-carboxy-benzoate à 28% ($T_{X-N}$ = -25°C, $T_{N-1}$ = +61 °C) présente des seuils de cassure de l'ancrage zénithal très bas: $U_{\lambda/2}$ = 10,8V à $T_{red}$ = 0,9. Ce mélange permet d'obtenir la gamme de température nécessaire avec des matériaux d'une seule classe (AIV). Il faut cependant remarquer que ce mélange est trop visqueux pour la plupart des applications.

En conclusion, les inventeurs ont ainsi trouvé quatre classes de matériaux nématiques à groupes polaires terminaux dont les ancrages sont faibles. Leur forte anisotropie diélectrique donne un couplage important avec le champ électrique et permet la commutation quand ils sont utilisés dans des afficheurs nématiques bistables. Les structures moléculaires différentes des quatre classes leur donnent des domaines nématiques dont les gammes de température s'étagent, dans l'échelle Celsius, depuis plus de cent degrés jusqu'aux températures négatives. En mélangeant des composés de ces quatre classes, on obtient des mélanges à large gamme de température. Four éviter, à basse température, des cristallites de composés des classes de température élevée, il faut de plus pour chaque classe mélanger des matériaux d'une même famille : leurs chaînes aliphatiques différentes gêneront ainsi la cristallisation.

Les propriétés d'ancrage, l'anisotropie diélectrique et la large gamme de température nématique des mélanges obtenus avec ces quatre classes permettent de réaliser des afficheurs nématiques bistables.

**3) Matériaux pour mélanges plus élaborés**

En cherchant à réaliser des mélanges à partir uniquement des composants des classes A qui ont des groupes polaires terminaux, on aboutit à des mélanges de biréfringence très élevée et de très forte viscosité. Même les phényldioxanes cités plus haut ne sont pas capables de diminuer la biréfringence en dessous de 0,09.

Pour adapter au mieux la viscosité et la biréfringence des mélanges, les inventeurs ont découvert des classes de matériaux qui peuvent compléter la recette des mélanges réalisés à l'aide des matériaux des classes A. Ces classes ont pour formules:

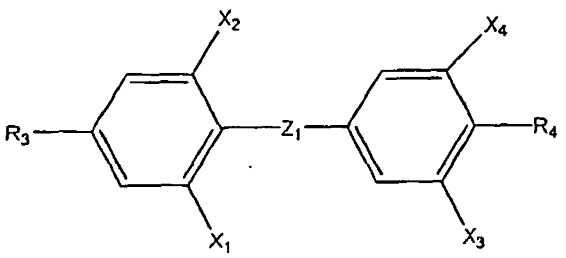

BI

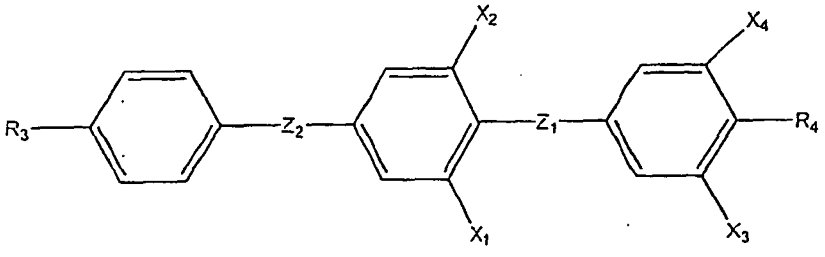

BII

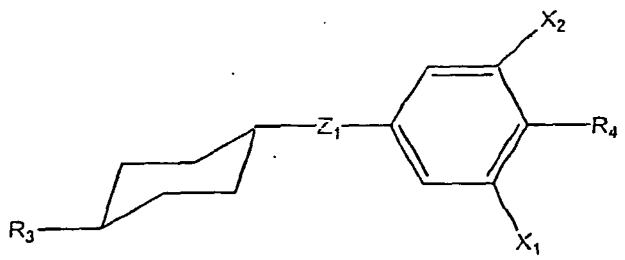

EI

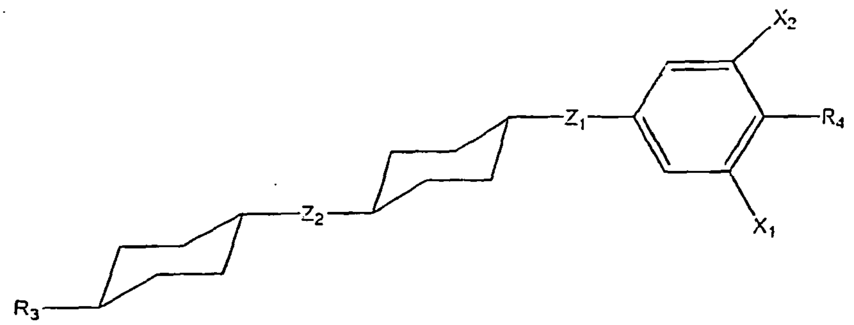

EII

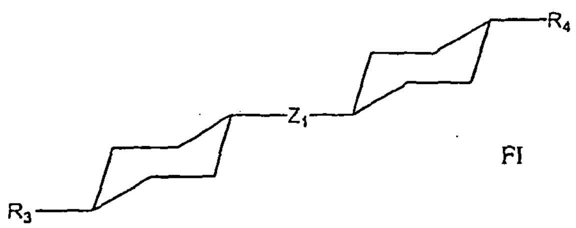

FI

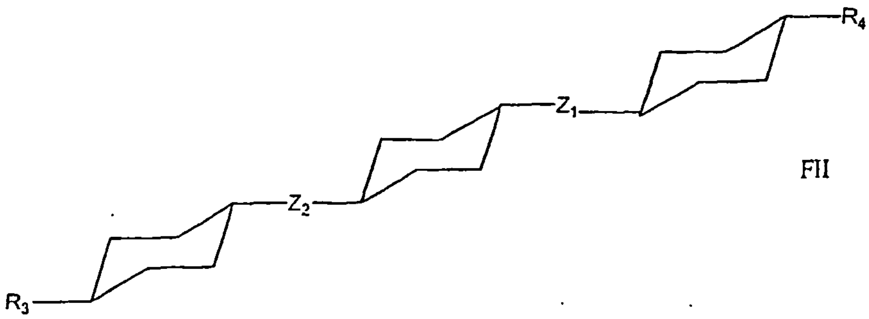

FII

où :

$R_3$ et $R_4$ identiques ou différents, sont des groupements R-, RO- ou RCOO- où R est une chaîne alkyle de 1 à 12 atomes de carbone ou un radical cycloaliphatique portant éventuellement une chaîne alkyle de 1 à 12 atomes de carbone,
$Z_1$ et $Z_2$ identiques ou différents, sont des groupements -C≡C-, $-CH_2-CH_2-$, -COO-, - OCO- ou de simples liaisons,
$X_1$ et $X_2$ identiques ou différents, sont des atomes de fluor, de chlore ou d'hydrogène,
$X_3$ et $X_4$ identiques ou différents, sont des atomes d'hydrogène ou d'halogène, notamment fluor ou chlore, ou des groupes R- ou RO- où R est une chaîne alkyle de 1 à 12 atomes de carbone.

Les inventeurs ont montré que les composés de ces classes, mélangés aux composés A, gardent l'ancrage faible et peuvent le rendre encore plus faible. Ces composés diminuent fortement la viscosité du mélange et augmentent ainsi la vitesse d'affichage. Cependant, n'étant pas polaires, les matériaux de ces classes diminuent l'anisotropie diélectrique, donc le couplage avec le champ électrique. Ils peuvent ainsi augmenter la valeur du seuil de cassure. Les composés de formule B rendent plus faible l'ancrage, prolongent vers les hautes températures la phase nématique et diminuent la viscosité en empêchant la dimérisation des composés A. Les composés de formule E rendent plus faible l'ancrage zénithal et favorisent la miscibilité des composés F dans le mélange. Les composés de formule F baissent fortement la viscosité.

## DESCRIPTION DE L'INVENTION

A la suite de cette étude les inventeurs ont réalisé avec les classes de matériaux précédents des mélanges nématiques de faible énergie d'ancrage zénithal. Ces mélanges peuvent assurer un ancrage zénithal faible dans une large gamme de température. En variant les proportions des différents composés dans le mélange, ses propriétés mécaniques, électriques et optiques sont ajustables selon les besoins des différents afficheurs bistables.

La présente invention a en conséquence pour objet l'utilisation d'un mélange cristal liquide nématique à faible énergie d'ancrage zénithal dans un dispositif d'affichage bistable à cassure d'ancrage faisant intervenir des composés particuliers dont les proportions relatives sont déterminées pour obtenir un mélange qui possède simultanément :

- la propriété nouvelle d'avoir un ancrage zénithal faible du mélange cristal liquide sur au moins l'une des plaques de l'afficheur bistable. Cet ancrage est caractérisé par une tension de cassure $U_{\lambda/2}$ < 25 Volts pour une cellule d'épaisseur $d$ telle que $\Delta n\ d$ = 295 nm (valeur mesurée à la température de +20°C),
- une température de transition nématique - liquide isotrope ($T_{N-1}$) du mélange cristal liquide supérieure ou égale à +50°C,
- une plage nématique $\Delta T_N$ du mélange cristal liquide supérieure ou égale à 50°C et
- une anisotropie diélectrique positive, supérieure ou égale à 8 $10^{11}$ F/m, valeur mesurée à la température de +20°C.

Le mélange selon l'invention est réalisé en mélangeant au moins 40% en masse, de préférence entre 60% et 90%, de composés choisis parmi les composés de formules AI, AII, AIII et AIV (groupe A), ce qui est indispensable pour assurer la forte anisotropie diélectrique du mélange. L'utilisation de matériaux de ces différentes classes participe à l'élargissement de la gamme de température nématique.

Le mélange peut contenir jusqu'à 50% de composés à ancrage faible choisis parmi les composés de formule BI, BII, EI, EII, FI et FII, ce qui permet de baisser si nécessaire la viscosité et la biréfringence du mélange.

Il doit contenir moins de 20% en masse et de préférence aucun des composés choisis parmi les composés de formule CI et CII pour éviter d'augmenter l'énergie d'ancrage. Il ne faut les ajouter que pour des applications précises nécessitant par exemple de baisser la viscosité sans diminuer l'anisotropie diélectrique.

Le mélange doit surtout ne contenir pas plus de 5% en masse et de préférence aucun des composés de formule DI et DII qui augmentent fortement l'ancrage zénithal.

Les composés de formules AI à AIV, BI et BII, CI et CII, DI et DII, EI et EII, FI et FII sont connus (Handbook of Liquid Crystals (1998) WTLEY-VCH Weinheim), mais leurs utilisations pour réaliser des mélanges présentant des ancrages zénithaux faibles adaptés aux afficheurs nématiques bistables à cassure d'ancrage n'ont jamais été décrites.

De même, des compositions de cristaux liquides à base de ces composés sont connues (cf par exemple les demandes de brevet et brevets suivants : US 4 450 094, US 4 886 621, DE 101 33 867, GB 2 250 748, US 2002/0030180, US 4 413 734, US 4 818 428, US 2002/0003226, DE 39 06 038 et DE 100 53 896) mais leurs utilisations dans des dispositifs d'affichage bistable à cassure d'ancrage n'est pas décrite.

Dans un mode de réalisation avantageux de l'invention :

- les composés de formule AI sont choisis dans le groupe comprenant le 4-éthyl-4'-cyanobiphényle, le 4-propyl-4'-cyanobiphényle, le 4-butyl-4'-cyanobiphényle, le 4-pentyl-4'-cyanobiphényle, le 4-hexyl-4'-cyanobiphényle le 4-heptyl-4'-cyanobiphényle, le 4-cyanophényl-4'-éthylbenzoate, le 4-cyanophényl-4'-propylbenzoate, le 4-cyanophényl-4'-butylbenzoate, le 4-cyanophényl-4'-pentylbenzoate, le 4-cyanophényl-4'-hexylbenzoate, le 4-cyanophényl-4'-heptylbenzoate, le 4-cyanophényl-4'-octylbenzoate, le 3-fluoro-4-cyanophényl-4'-éthylbenzoate, le 3-fluoro-4-cyanophényl-4'-propylbenzoate, le 3-fluoro-4-cyanophényl-4'-butylbenzoate et le 3-fluoro-4-cyanophényl-4'-pentylbeilzoate.
- les composés de formule AII sont choisis dans le groupe comprenant le 4-cyai-iobipliényl4'-pentylbenzoate, le 3-fluoro-4-cyanophényl-4'-trans-pentyl-phénylbenzoate, le 3-fluoro-4-cyanophényl-4'-trans-pentyl-cyclohexyl-phényl-carboxy-benzoate et le 4-pentyl-4'cyanoterphényl.
- les composés de formule AIII sont choisis dans le groupe comprenant le 4-(5-propyl-[1,3]dioxane-2-yl)-cyanobenzène et le 4-(5-pentyt-[1,3]dioxane-2-yl)-cyanobenzène,
- les composés de formule AIV sont choisis dans le groupe comprenant le 4-cyanophényl-4'-trans-propyl-cyclohexyl-benzoate, le 4-cyanophényl-4'-trans-butyl-cyclohexyl-benzoate, le 4-cyanophényl-4'-trans-pentyl-cyclohexyl-benzoate, le 3-fluoro-4-cyanophényl-4'-trans-éthyl-cyclohéxyl-carboxy-benzoate, le 3-fluoro-4-cyanophényl-4'-trans-propyl-cyclohexyl-carboxy-benzoate, le 3-fluoro-4-cyanophényl-4'-trans-butyl-cyclohexyl-carboxy-benzoate et le 3-fluoro-4-cyanophényl-4'-trans-pentyl-cyclohexyl-carboxy-benzoate

- les composés de formule BI sont choisis dans le groupe comprenant le 4,4'-Bis-(4-propylcyclohexyl) -3-fluorobiphényle, le 4,4'-Bis-(4-propylcyclohexyl)-biphényle et le 4'-(4-pentyl-cyclohexyl)-4-(4-propyl-cyclohexyl)-biphényle
- le composé de formule EI est par exemple le 4-pentylphényl-4'-trans-pentylcyclohexycarboxylate.

Les mélanges peuvent être préparés par toute méthode connue de l'homme du métier. Par exemple après rassemblement des composants, le mélange sera homogénéisé en phase isotrope par agitation magnétique dans un bain-marie et sous atmosphère neutre.

La présente invention a également pour objet un dispositif d'affichage bistable à cassure d'ancrage utilisant un mélange cristal liquide tel que décrit précedemment.

Dans un mode de réalisation avantageux de l'invention, le dispositif d'affichage bistable est un affichage BINEM®.

**EXEMPLES ILLUSTRANT L'INVENTION.**

Les exemples qui suivent illustrent l'invention sans pour autant en limiter la portée.

Les premiers cinq exemples de mélanges ont été réalisés à partir uniquement de produits appartenant aux quatre classes chimiques A. Ils montrent qu'avec ceux-ci les inventeurs ont réalisé des mélanges d'ancrage faible ($U_{\lambda/2}$ ≅ 10 V ). Des composés choisis dans ces différentes classes sont nécessaires pour que le mélange présente la très large gamme de température indiquée.

Exemple 1 :

| Concentration [% en masse] | Classe chimique | Nom du composant chimique |
|---|---|---|
| 6,4 | AI | 4-éthyl-4'-cyanobiphényle |
| 4,1 | AI | 4-propyl-4'-cyanobiphényle |
| 35,7 | AI | 4-pentyl-4'-cyanobiphényle |
| 19,1 | AI | 4-heptyl-4'-cyanobiphényle |
| 3,6 | AI et AIV | 4-cyanophenyl-4'-éthylbenzoate |
| 2,9 | AI et AIV | 4-cyanophényl-4'-propylbenzoate |
| 5,1 | AI et AIV | 4-cyanophényl-4'-pentylbenzoate |
| 18,4 | AIV | 3-fluoro-4-cyanophényl -4'-trans-pentyl-cyclohexyl-carboxy-benzoate |
| 4,7 | AII | 3-fluoro-4-cyanophényl-4'-trans-pentyl-cyclohexyl-phényl-carboxy-benzoate |
| $T_{N-1}$ = +67 °C ; $T_{X-N}$ < -20°C ; $\Delta T_N$ > 87 °C.<br>$U_{\lambda/2}$ = 15,5 V à $T_{red}$ = 0,9 ; $U_{\lambda/2}$ = 19,1 V à $T$= 20°C. | | |

Exemple 2 :

| Concentration [% en masse] | Classe chimique | Nom du composant chimique |
|---|---|---|
| 23,1 | AI | 4-pentyl-4'-cyanobiphényle |
| 16,1 | AI | 4-heptyl-4'-cyanobiphényle |
| 7,2 | AI et AIV | 4-cyanophényl-4'-éthylbenzoate |

(suite)

| Concentration [% en masse] | Classe chimique | Nom du composant chimique |
|---|---|---|
| 7,2 | AI et AIV | 4-cyanophényl-4'-propylbenzoate |
| 13,1 | AI et AIV | 4-cyanophényl-4'-butylbenzoate |
| 14,5 | AI et AIV | 4-cyanophényl-4'-pentylbenzoate |
| 12,6 | AII et AIV | 3-fluoro-4-cyanophényl-4'-pentyl-phénylbenzoate |
| 6,2 | AII | 3-fluoro-4-cyanophényl-4'-trans-pentyl-cyclohexyl-phényl-carboxy-benzoate |
| $T_{N-1}$ = +67 °C ; $T_{X-N}$<- 20°C; $\Delta T_N$ > 87 °C.<br>$U_{\lambda/2}$=10,8 V à $T_{red}$ = 0,9 ; $U_{\lambda/2}$ = 15,2 V à $T$ =20°C | | |

Exemple 3:

| Concentration [% en masse] | Classe chimique | Nom du composant chimique |
|---|---|---|
| 23,7 | AI | 4-pentyl-4'-cyanobiphényle |
| 16,5 | AI | 4-heptyl-4'-cyanobiphényle |
| 6,9 | AI et AIV | 3-fluoro-4-cyanophényl-4'-éthylbenzoate |
| 6,9 | AI et AIV | 3-fluoro-4-cyanophényl-4'-propylbenzoate |
| 12,8 | AI et AIV | 3-fluoro-4-cyanophényl-4'-butylbenzoate |
| 13,9 | AI et AIV | 3-fluoro-4-cyanophényl-4'-pentylbenzoate |
| 13,2 | AII | 4-cyanobiphényl-4'-pentylbenzoate |
| 6,1 | AII | 3-fluoro-4-cyanophényl-4'-trans-pentyl-cyclohexyl-phényl-carboxy-benzoate |
| $T_{N-1}$ =+62 °C ; $T_{X-N}$< -20 °C ; $\Delta T_N$> 82 °C.<br>$U_{\lambda/2}$ = 10,1 V à $T_{red}$ = 0,9 ; $U_{\lambda/2}$ = 13,4 V à $T$= 20°C. | | |

Exemple 4:

| Concentration [% en masse] | Classe chimique | Nom du composant chimique |
|---|---|---|
| 21,8 | AI | 4-pentyl-4'-cyanobiphényle |
| 15,2 | AI | 4-heptyl-4'-cyanobiphényle |
| 7,3 | AI et AIV | 3-fluoro-4-cyanophényl-4'-éthylbenzoate |
| 7,3 | AI et AIV | 3-fluoro-4-cyanophényl-4'-propylbenzoate |
| 13,3 | AI et AIV | 3-fluoro-4-cyanophényl-4'-butylbenzoate |
| 14,7 | AI et AIV | 3-fluoro-4-cyanophényl-4'-pentylbenzoate |
| 13,7 | AII | 3-fluoro-4-cyanophényl-4'-pentylphénylbenzoate |

(suite)

| Concentration [% en masse] | Classe chimique | Nom du composant chimique |
|---|---|---|
| 6,7 | AII | 4-pentyl-trans-cyclohexyl-benzoate-4'-phényl-carboxylate de 4-cyano-3-fluorobenzène |
| $T_{N-1}$= +61 °C ; $T_{X-N}$ < -20 °C ; $\Delta T_N$ > 81 °C. $U_{\lambda/2}$=12,6 V à $T_{red}$=0,9 ; $U_{\lambda/2}$=14,2 V à $T$=20°C. | | |

Exemple 5:

| Concentration [% en masse] | Classe chimique | Nom du composant chimique |
|---|---|---|
| 8,5 | A I | 4-éthyl-4'-cyanobiphényle |
| 4,2 | A I | 4-butyl-4'-cyaliobiphényle |
| 29,8 | AI | 4-pentyl-4'-cyanobiphényle |
| 3,5 | A II | 4-pentyl-4'-cyanoterphényle |
| 8 | AI et AIV | 3-fluoro-4-cyanophényl-4'-éthylbenzoate |
| 16 | AI et AIV | 3-fluoro-4-cyanophényl-4'-butylbenzoate |
| 8 | AI et AIV | 3-fluoro-4-cyanophényl-4'-pentylbenzoate |
| 14 | A IV | 3-fluoro-4-cyanophényl-4'-trans-pentyl phénylbenzoate |
| 4 | A IV | 3-fluoro-4-cyanophényl-4'-trans-pentyl cyclohexylbenzoate |
| 4 | AIV | 3-fluoro-4-cyanophényl-4'-trans-cyclohexyl-carboxybenzoate |
| $T_{N-1}$ = +74 °C ; $T_{X-N}$ < -21 °C ; $\Delta T_N$ > 95°C. $U_{\lambda/2}$ = 10,1 V à $T_{red}$ = 0,9; $U_{\lambda/2}$ = 11,2 V à $T$= +20 °C. | | |

Pour certaines applications les mélanges précédents peuvent présenter une biréfringence trop élevée ( $\Delta n \cong 0,2$ ). L'ajout de matériaux appartenant aux classes chimiques B, grâce aux groupes polarisables $X_1$, $X_2$, $X_3$ ou $X_4$, permet d'ajuster la biréfringence vers 0,15. Les exemples suivants montrent qu'ils risquent de diminuer la plage de température.

Exemple 6 :

| Concentration [% en masse] | Classe chimique | Nom du composant chimique |
|---|---|---|
| 12,2 | AI | 4-éthyl-4'-cyanobiphényle |
| 7,0 | AI | 4-propyl-4'-cyanobiphényle |
| 29,2 | AI | 4-pentyl-4'-cyanobiphényle |
| 15,9 | AI | 4-heptyl-4'-cyanobiphényle |
| 6,7 | AIII | 4-(5-propyl-[1,3]dioxane-2-yl)-cyanobenzène |
| 10,7 | AIII | 4-(5-pentyl-[1,3]dioxane-2-yl)-cyanobenzène |
| 4,2 | BI | 4,4'-Bis-(4-propyl-cyclohexyl) -3-fluorobiphényle |
| 6,1 | BI | 4,4'-Bis-(4-propyl-cyclohexyl)-biphényle |

(suite)

| Concentration [% en masse] | Classe chimique | Nom du composant chimique |
|---|---|---|
| 8,0 | BI | 4'-(4-pentyl-cyclohexyl)-4-(4-propyl-cyclohexyl)-biphényle |
| $T_{N-1}$=+76 °C ; $T_{X-N}$= +17 °C ; $\Delta T_N$= 59°C<br>$U_{\lambda/2}$ = 13,6 V à $T_{red}$ = 0,9 ; $U_{\lambda/2}$ = 18,4 V à $T$ = 20 °C. | | |

Exemple 7 :

| Concentration [% en masse] | Classe chimique | Nom du composant chimique |
|---|---|---|
| 23,2 | AI | 4-pentyl-4'-cyanobiphényl |
| 16,1 | AI | 4-heptyl-4'-cyanobiphényl |
| 7,2 | AI et AIV | 3-fluoro-4-cyanophényl-4'-éthylbenzoate |
| 7,2 | AI et AIV | 3-fluoro-4-cyanophényl-4'-propylbenzoate |
| 13,2 | AI et AIV | 3-fluoro-4-cyanophényl-4'-butylbenzoate |
| 14,5 | AI et AIV | 3-fluoro-4-cyanophényl-4'-pentylbenzoate |
| 12,7 | AII | 4-cyanobiphényl-4'-pentylbenzoate |
| 5,9 | BI | 4,4'-Bis-(4-propyl-cyclohexyl)-biphényle |
| $T_{N-1}$ = +61 °C ; $T_{X-N}$ = +5 °C ; $\Delta T_N$= 56 °C.<br>$U_{\lambda/2}$ = 10,1 V à $T_{red}$ = 0,9 ; $U_{\lambda/2}$ = 13,2 V à $T$ = 20 °C. | | |

Exemple 8 :

| Concentration [% en masse] | Classe chimique | Nom du composant chimique |
|---|---|---|
| 22,6 | AI | 4-pentyl-4'-cyanobiphényle |
| 15,7 | AI | 4-heptyl-4'-cyanobiphényle |
| 7,3 | AI et AIV | 3-fluoro-4-cyanophényl-4'-éthylbenzoate |
| 7,3 | AI et AIV | 3-fluoro-4-cyanophényl-4'-propylbenzoate |
| 13,2 | AI et AIV | 3-fluoro-4-cyanophényl-4'-butylbenzoate |
| 14,7 | AI et AIV | 3-fluoro-4-cyanophényl-4'-pentylbenzoate |
| 13,2 | AII | 3-fluoro-4-cyanophényl-4'-pentyl-5-phénylbenzoate |
| 6,0 | BI | 4,4'-Bis-(4-propyl-cyclohexyl)-biphényle |
| $T_{N-1}$ = +58°C ; $T_{X-N}$ <-10°C ; $\Delta T_N$ > 68°C.<br>$U_{\lambda/2}$ = 10,9 V à $T_{red}$ = 0,9 ; $U_{\lambda/2}$ = 12,9 V à $T$ = 20 °C. | | |

Exemple 9:

| Concentration [% en masse] | Classe chimique | Nom du composant chimique |
|---|---|---|
| 23,8 | AI | 4-pentyl-4'-cyanobiphényle |

(suite)

| Concentration [% en masse] | Classe chimique | Nom du composant chimique |
|---|---|---|
| 16,5 | AI | 4-heptyl-4'-cyanobiphényle |
| 7,2 | AI et AIV | 3-fluoro-4-cyanophényl-4'-éthylbenzoate |
| 7,2 | AI et AIV | 3-fluoro-4-cyanophényl-4'-propylbenzoate |
| 13,3 | AI et AIV | 3-fluoro-4-cyanophényl-4'-butylbenzoate |
| 14,5 | AI et AIV | 3-fluoro-4-cyanophényl-4'-pentylbenzoate |
| 11,6 | AII | 3-fluoro-4-cyanophényl-4'-pentyl phénylbenzoate |
| 5,9 | BI | 4,4'-Bis-(4-propyl-cyclohexyl)-biphényle |
| $T_{N-1}$= +55 °C ; $T_{X-N}$ < -10 °C ; $\Delta T_N$ > 65 °C. $U_{\lambda/2}$=11,9 V à $T_{red}$=0,9; $U_{\lambda/2}$=12,8 V à $T$=20°C. | | |

Dans l'exemple suivant, les inventeurs ont introduit un composé de la classe E pour rétablir une très large gamme de température, malgré la présence des matériaux B utiles pour ajuster la biréfringence.

Exemple 10:

| Concentration [% en masse] | Classe chimique | Nom du composant chimique |
|---|---|---|
| 13,0 | A I | 4-pentyl-4'-cyanobiphényle |
| 13,0 | AI | 4-heptyl-4'-cyanobiphényle |
| 6,3 | AI et AIV | 3-fluoro-4-cyanophényl-4'-éthylbenzoate |
| 10,8 | AI et AIV | 3-fluoro-4-cyanophényl-4'-propylbenzoate |
| 12,1 | AI et AIV | 3-fluoro-4-cyanophényl-4'-butylbenzoate |
| 12,1 | AI et AIV | 3-fluoro-4-cyanophényl-4'-pentylbenzoate |
| 14,0 | EI | 4-pentylphényl-4'-pentylcyclohexycarboxylate |
| 8,6 | A IV | 4-cyanophényl-4'-trans-butyl-cyclohexyl benzoate |
| 4,2 | A IV | 3-fluoro-4-cyanophényl-4'-trans-pentyl-cyclohexyl benzoate |
| 3,9 | B I | 4,4'-Bis-(4-propyl-cyclohexyl)-3-fluorobiphényle |
| 2,7 | B I | 4,4'-Bis-(4-propyl-cyclohexyl)-biphényle |
| $T_{N-1}$=+61 °C ; $T_{X-N}$ < -16°C ; $\Delta T_N$ > 77°C. $U_{\lambda/2}$ = 12,8 V à $T_{red}$ = 0,9 ; $U_{\lambda/2}$ = 14,2 V à $T$=+20°C. | | |

Le dernier exemple est particulièrement intéressant : il confirme la différence entre les mélanges optimisés pour les afficheurs à cassure d'ancrage et ceux pour les afficheurs classiques. Pour abaisser la consommation et le prix de l'électronique de commande des afficheurs à cassure d'ancrage, il faut des mélanges à faible ancrage : $U_{\lambda/2}$ < 25V (propriété de surface) ; pour obtenir le même résultat pour des afficheurs classiques, il faut abaisser la tension seuil de Fréedericksz (propriété de volume).

L'exemple 11 montre que ces deux propriétés ne sont pas directement liées. Ce mélange ne comporte que 50% de matériaux polaires. Son anisotropie diélectrique et sa biréfringence optique sont nettement inférieures à celles des autres exemples. Ceci fait monter nettement son seuil de Fréedericksz (1V au lieu de 0,6V). Il serait considéré comme médiocre pour un afficheur classique. Il est meilleur que les autres exemples pour un afficheur à cassure d'ancrage : son ancrage est identique mais sa biréfringence faible permet d'utiliser une cellule plus épaisse donc plus facile à réaliser.

Exemple 11:

| Concentration [% en masse] | Classe chimique | Nom du composant chimique |
|---|---|---|
| 14,3 | A I | 4-pentyl-4'-cyanobiphényle |
| 10,4 | A I | 4-heptyl-4'-cyanobiphényle |
| 3,0 | AI et AIV | 3-fluoro-4-cyanophényl-4'-éthylbenzoate |
| 4,9 | AI et AIV | 3-fluoro-4-cyanophényl-4'-propylbenzoate |
| 5,8 | AI et AIV | 3-fluoro-4-cyanophényl-4-butylbenzoate |
| 6,4 | AI et AIV | 3-fluoro-4-cyanophényl-4'-pentylbenzoate |
| 5,4 | A.II | 4-pentyl-trans-cyclohexyl-benzoate-4'-phényl-carboxylate de 4-cyano-3-fluorobenzène |
| 5,4 | A.II | 4-pentyl-trans-cyclohexyl-benzoate-4'-phényl-carboxylate de 4-cyano-3-fluorobenzène |
| 8,4 | E.I | 4-pentylphényl-4'-propylcyclohexycarboxylate |
| 5,2 | E.I | 4-pentylphényl-4'-pentylcyclohexycarboxylate |
| 12,1 | B.I | 4-pentylphényl-4'-propylphénylcarboxylate |
| 7,5 | B.I | 4-pentylphériyl-4'-pentylphénylcarboxylate |
| 4,2 | B.I | 4,4'-Bis-(4-propyl-cyclohexyl)-biphényle |
| 4,1 | B.I | 4-propylcyclohexyl-4'-pentylcyclohexyl biphényle |
| 4,1 | B.I | 4-propylphényléthynyl-4'-butyl phényle |
| 4,2 | B.I | 4-hexylcarboxyphényléthynyl-4'-hexylcarboxyl phényle |
| $T_{N\text{-}1}$ = + 58°C; $T_{X\text{-}N}$ = -3°C; $\Delta T_N$= 61 °C.<br>$U_{\lambda/2}$ = 15,7 V à $T_{red}$ = 0,9; $U_{\lambda/2}$ =16,3V à $T$= +20 °C. | | |

**Revendications**

**1.** Utilisation d'un mélange cristal liquide nématique à faible énergie d'ancrage zénithale dans un dispositif d'affichage bistable à cassure d'ancrage, ledit mélange comprenant:

a) au moins 40% en masse de composés de forte polarisabilité moléculaire ($\Delta\varepsilon_r$>10) et fort moment dipolaire ($\mu$> 1D) présentant cependant un ancrage zénithal faible, choisis parmi les composés de formule (AI, AII, AIII et AIV) qui suivent:

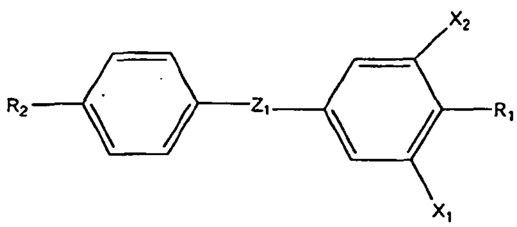

AI

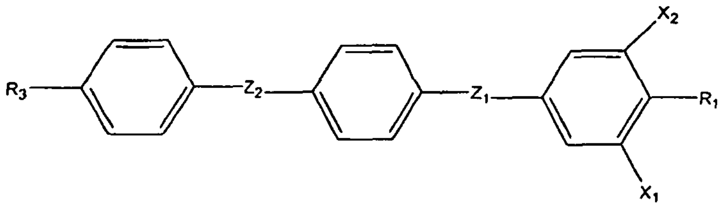

AII

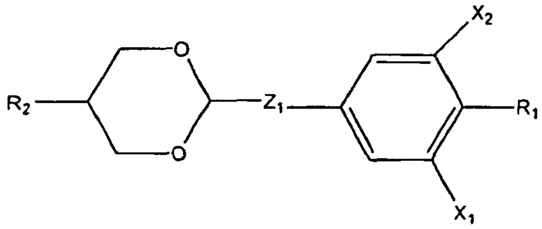

AIII

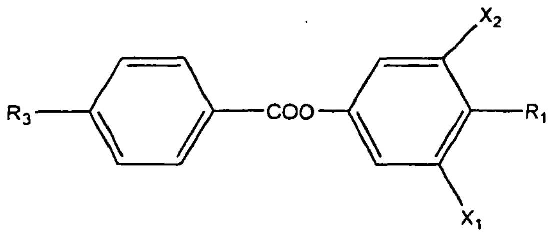

AIV

où :

$R_1$ est un groupement polaire -CN, -NCS, -F ou $-CF_3$,
$R_2$ est un groupement R-, RO- ou RCOO-, où R représente une chaîne alkyle de 1 à 12 atomes de carbone,
$R_3$ est un groupement R-, RO- ou RCOO-, où R représente une chaîne alkyle de 1 à 12 atomes de carbone ou un radical cycloaliphatique portant éventuellement une chaîne alkyle de 1 à 12 atomes de carbone,
$Z_1$ et $Z_2$ identiques ou différents, sont des groupements -C≡C-, $-CH_2-CH_2-$, -COO-, -OCO- ou de simples liaisons,
et $X_1$ et $X_2$ identiques ou différents, sont des atomes de fluor, de chlore ou d'hydrogène,

b) au plus environ 50% de composés à ancrage faible choisis parmi les composés de formule (BI, BII, EI, EII, FI et FII) qui suivent:

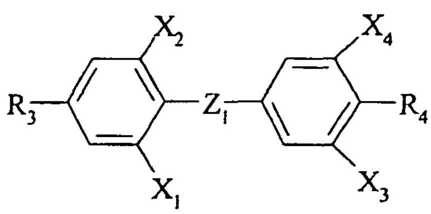

BI

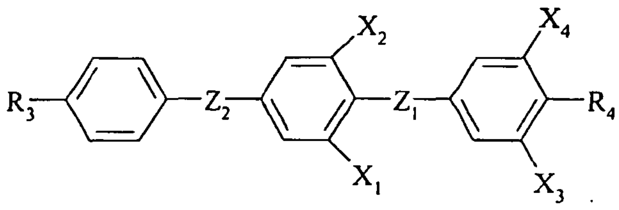

BII

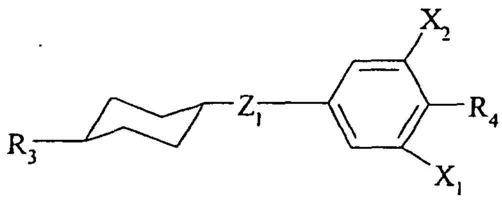

EI

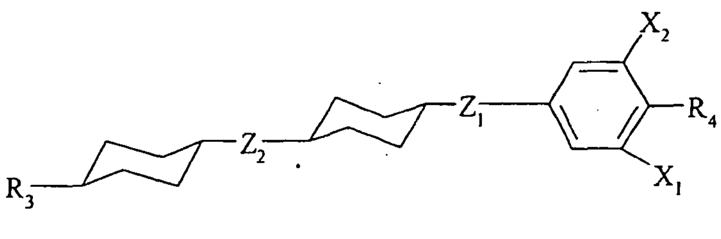

EII

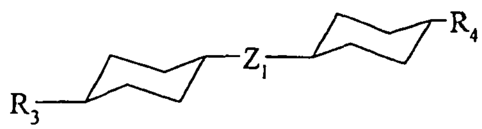

FI

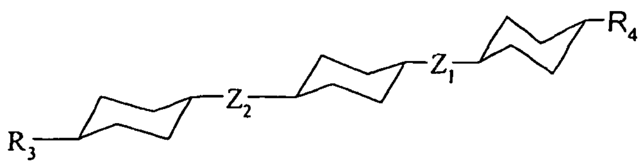

FII

où:

$R_3$ et $R_4$ identiques ou différents, sont des groupements R-, RO- ou RCOO- où R est une chaîne alkyle de 1 à 12 atomes de carbone ou un radical cycloaliphatique portant éventuellement une chaîne alkyle de 1 à 12 atomes de carbone,

$Z_1$ et $Z_2$ identiques ou différents, sont des groupements -C≡C-, $-CH_2-CH_2-$, -COO--OCO- ou de simples liaisons,

$X_1$ et $X_2$ identiques ou différents, sont des atomes de fluor, de chlore ou d'hydrogène, $X_3$ et $X_4$ identiques ou différents, sont des atomes d'hydrogène ou d'halogène, notamment fluor ou chlore, ou des groupes R- ou RO- où R est une chaîne alkyle de 1 à 12 atomes de carbone,

c) au plus environ 20% en masse de composés comportant des dipôles choisis parmi les composés de formule (CI et CII) qui suivent:

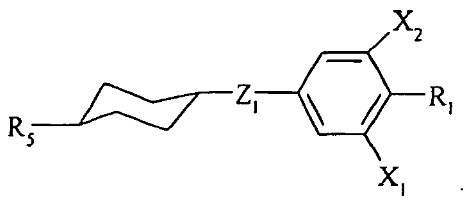

CI

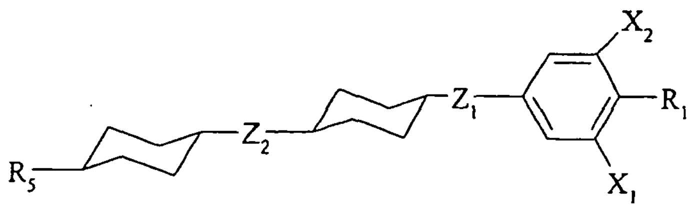

CII

où

$R_1$ est un groupement polaire -CN, -NCS, -F ou $-CF_3$,
$R_5$ est un groupement R- ou RCOO-, où R représente une chaîne alkyle de 1 à 12 atomes de carbone,
$Z_1$ et $Z_2$ identiques ou différents sont des groupements -C≡C-, $-CH_2-CH_2-$, -COO-, -OOC- ou de simples liaisons, et
$X_1$ et $X_2$ identiques ou différents, sont des atomes de fluor, de chlore ou d'hydrogène,

d) au plus environ 5% en masse de composé de formule DI et DII:

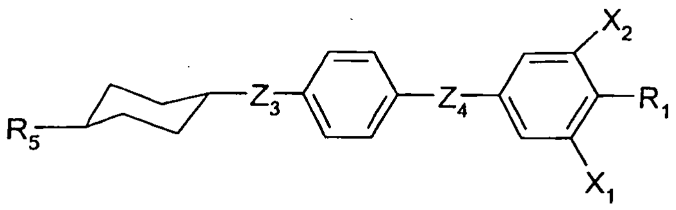

DI

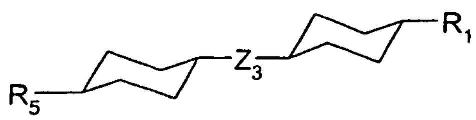

DII

où

$R_1$ est un groupement polaire -CN, -NCS, -F ou $-CF_3$,
$R_5$ est un groupement R- et RCOO-, où R représente une chaîne alkyle de 1 à 12 atomes de carbone,
$Z_3$ et $Z_4$ identiques ou différents, sont des groupements -C≡C-, $-CH_2-CH_2-$ ou de simples liaisons, et
$X_1$ et $X_2$ identiques ou différents, sont des atomes de fluor, de chlore ou d'hydrogène, les proportions relatives de composés précités entrant dans la composition du mélange cristal liquide nématique étant déterminées pour obtenir simultanément les caractéristiques physiques suivantes dudit mélange:

- une température de transition nématique - liquide isotrope ($T_{N-1}$) du mélange cristal liquide supérieure ou égale à +50°C,
- une plage nématique $\Delta T_N$ du mélange cristal liquide supérieure ou égale à 50°C,
- une anisotropie diélectrique positive, supérieure ou égale à 8 $10^{-11}$ F/m (valeur mesurée à la température de +20°C),

- un ancrage zénithal faible sur au moins l'une des plaques de l'afficheur bistable, **caractérisé par** une tension de cassure $U_{\lambda/2}$ < 25 Volts pour une cellule d'épaisseur d telle que Δn *d*= 295 nm, valeur mesurée à la température de +20°C.

2. Utilisation selon la revendication 1, **caractérisée en ce que** le mélange comprend entre 60% et 90% en masse des composés de formule AI, AII, AIII et AIV.

3. Utilisation selon l'une des revendications 1 et 2, **caractérisée en ce que** le mélange est pratiquement exempt de composés de formules CI et CII.

4. Utilisation selon l'une des revendications 1 à 3, **caractérisée en ce que** le mélange est pratiquement exempt de composés de formules DI et DII.

5. Utilisation selon l'une des revendications 1 à 4, **caractérisée en ce que**

- les composés de formule AI sont choisis dans le groupe comprenant le 4-éthyl-4'-cyanobiphényle, le 4-propyl-4'-cyanobiphényle, le 4-butyl-4'-cyanobiphényle, le 4-pentyl-4'-cyanobiphényle, le 4-hexyl-4'-cyanobiphényle, le 4-heptyl-4'-cyanobiphényle, le 4-cyanophényl-4'-éthylbenzoate, le 4-cyanophényl-4'-propylbenzoate, le 4-cyanophényl-4'-butylbenzoate, le 4-cyanophényl-4'-pentylbenzoate, le 4-cyanophényl-4'-hexylbenzoate, le 4-cyanophényl-4'-heptylbenzoate, le 4-cyanophényl-4'-octylbenzoate, le 3-fluoro-4-cyanophényl-4'-éthylbenzoate, le 3-fluoro-4-cyanophényl-4'-propylbenzoate, le 3-fluoro-4-cyanophényl-4'-butylbenzoate, le 3-fluoro-4-cyanophényl-4'-pentylbenzoate,
- les composés de formule AII sont choisis dans le groupe comprenant le 4-cyanobiphényl-4'-pentylbenzoate, le 3-fluoro-4-cyanophényl-4'-trans-pentyl-phénylbenzoate, le 3-fluoro-4-cyanophényl-4'-trans-pentyl-cyclohexyl-phényl-carboxy-benzoate et le 4-pentyl-4'-cyanoterphényl.
- les composés de formule AIII sont choisis dans le groupe comprenant le 4-(5-propyl-[1,3]dioxane-2-yl)-cyanobenzène et le 4-(5-pentyl-[1,3]dioxane-2-yl)-cyanobenzène,
- les composés de formule AIV sont choisis dans le groupe comprenant le 4-cyanophényl-4'-trans-propyl-cyclohexyl-benzoate, le 4-cyanophényl-4'-trans-butyl-cyclohexyl-benzoate, le 4-cyanophényl-4'-trans-pentyl-cyclohexyl-benzoate, le 3-fluoro-4-cyanophényl-4'-trans-éthyl-cyclohéxyl-carboxy-benzoate, le 3-fluoro-4-cyanophényl-4'-trans-propyl-cyclohexyl-carboxy-benzoate, le 3-fluoro-4-cyanophényl-4'-trans-butyl-cyclohexyl-carboxy-benzoate et le 3-fluoro-4-cyanophényl-4'-trans-pentyl-cyclohexyl-carboxy-benzoate.

6. Utilisation selon l'une des revendications 1 à 5, **caractérisée en ce que** les composés de formule BI sont choisis dans le groupe comprenant le 4,4'-Bis-(4-propylcyclohexyl) -3-fluorobiphényle, le 4,4'-Bis-(4-propylcyclohexyl)-biphényle et le 4'-(4-pentylcyclohexyl)-4-(4-propylcyclohexyl)-biphényle.

7. Utilisation selon l'une des revendications 1 à 6, **caractérisée en ce que** le composé de formule EI est le 4-pentylphényl-4'-trans-pentylcyclohexycarboxylate.

8. Utilisation selon la revendication 1, **caractérisée en ce que** le mélange répond à la composition suivante :

| | % en masse |
|---|---|
| 4-ethyl-4'-cyanobiphényl | 6,4 |
| 4-propyl-4'-cyanobiphényl | 4,1 |
| 4-pentyl-4'-cyanobiphényl | 35,7 |
| 4-heptyl-4'-cyanobiphényl | 19,1 |
| 4-cyanophényl-4'-éthylbenzoate. | 3,6 |
| 4-cyanophényl-4'-propylbenzoate | 2,9 |
| 4-cyanophényl-4'-pentylbenzoate | 5,1 |
| 3-fluoro-4-cyanophényl-4'-trans-pentyl-cyclohexyl-carboxy-benzoate | 18,4 |
| 3-fluoro-4-cyanophényl-4'-trans-pentyl-cyclohexyl-phényl-carboxy-benzoate | 4,7 |

9. Utilisation selon la revendication 1, **caractérisée en ce que** le mélange répond à la composition suivante :

| | % en masse |
|---|---|
| 4-pentyl-4'-cyanobiphenyl | 23,1 |
| 4-heptyl-4'-cyanobiphenyl | 16,1 |
| 4-cyanophenyl-4'-ethylbenzoate | 7,2 |
| 4-cyanophenyl-4'-propylbenzoate | 7,2 |
| 4-cyanophenyl-4'-butylbenzoate | 13,1 |
| 4-cyanophenyl-4'-pentylbenzoate | 14,5 |
| 3-fluoro-4-cyanophenyl-4'-pentyl-phenylbenzoate | 12,6 |
| 3-fluoro-4-cyanophenyl-4'-trans-pentyl-cyclohexyl-phenyl-carboxy-benzoate | 6,2 |

**10.** Utilisation selon la revendication 1, **caractérisée en ce que** le mélange répond à la composition suivante :

| | % en masse |
|---|---|
| 4-pentyl-4'-cyanobiphényl | 23,7 |
| 4-heptyl-4'-cyanobiphényl | 16,5 |
| 3-fluoro-4-cyanophényl-4'-éthylbenzoate | 6,9 |
| 3-fluoro-4-cyanophényl-4'-propylbenzoate | 6,9 |
| 3-fluoro-4-cyanophényl-4'-butylbenzoate | 12,8 |
| 3-fluoro-4-cyanophényl-4'-pentylbenzoate | 13,9 |
| 4-cyanobiphényl-4'-pentylbenzoate | 13,2 |
| 3-fluoro-4-cyanophényl-4'-trans-pentyl-cyclohexyl-phényl-carboxy-benzoate | 6,1 |

**11.** Utilisation selon la revendication 1, **caractérisée en ce que** le mélange répond à la composition suivante :

| | % en masse |
|---|---|
| 4-pentyl-4'-cyanobiphényl | 21,8 |
| 4-heptyl-4'-cyanobiphényl | 15,2 |
| 3-fluoro-4-cyanophényl-4'-éthylbenzoate | 7,3 |
| 3-fluoro-4-cyanophényl-4'-propylbenzoate | 7,3 |
| 3-fluoro-4-cyanophényl-4'-butylbenzoate | 13,3 |
| 3-fluoro-4-cyanophényl-4'-pentylbenzoate | 14,7 |
| 3-fluoro-4-cyanophényl-4'-pentylphénylbenzoate | 13,7 |
| 4-pentyl-trans-cyclohexyl-benzoate-4'-phényl-carboxylate of 4-cyano-3-fluorobenzene | 6,7 |

**12.** Utilisation selon la revendication 1, **caractérisée en ce que** le mélange répond à la composition suivante :

| | % en masse |
|---|---|
| 4-Ethyl-4'-cyanobiphényl | 8,5 |
| 4-butyl-4'-cyanobiphényl | 4,2 |
| 4-pentyl-4'-cyanobiphényl | 29,8 |
| 4-pentyl-4'-cyanoterphényl | 3,5 |
| 3-fluoro-4-cyanophényl-4'-éthylbenzoate | 8 |
| 3-fluoro-4-cyanophényl-4'-butylbenzoate | 16 |
| 3-fluoro-4-cyanophényl-4'-pentylbenzoate | 8 |
| 3-fluoro-4-cyanophényl-4'-trans-pentyl-phénylbenzoate | 14 |
| 3-fluoro-4-cyanophényl-4'-trans-pentyl cyclohexylbenzoate | 4 |
| 3-fluoro-4-cyanophényl-4'-trans-cyclohexyl-carboxybenzoate | 4 |

**13.** Utilisation selon la revendication 1, **caractérisée en ce que** le mélange répond à la composition suivante :

| | % en masse |
|---|---|
| 4-ethyl-4'-cyanobiphényl | 12,2 |
| 4-propyl-4'-cyanobiphényl | 7,0 |
| 4-pentyl-4'-cyanobiphényl | 29,2 |
| 4-heptyl-4'-cyanobiphényl | 15,9 |
| 4-(5-propyl-[1.3]dioxane-2-yl)-cyanobenzène | 6,7 |
| 4-(5-pentyl-[1.3]dioxane-2-yl)-cyanobenzène | 10,7 |
| 4,4'-Bis-(4-propyl-cyclohexyl)-3-fluorobiphényl | 4,2 |
| 4,4'-Bis-(4-propyl-cyclohexyl)-biphényl | 6,1 |
| 4'-(4-pentyl-cyclohexyl)-4-(4-propyl-cyclohexyl)-biphényl | 8,0 |

**14.** Utilisation selon la revendication 1, **caractérisée en ce que** le mélange répond à la composition suivante :

| | % en masse |
|---|---|
| 4-pentyl-4'-cyanobiphényl | 23,2 |
| 4-heptyl-4'-cyanobiphényl | 16,1 |
| 3-fluoro-4-cyanophényl-4'-éthylbenzoate | 7,2 |
| 3-fluoro-4-cyanophényl-4'-propylbenzoate | 7,2 |
| 3-fluoro-4-cyanophényl-4'-butylbenzoate | 13,2 |
| 3-fluoro-4-cyanophényl-4'-pentylbenzoate | 14,5 |
| 4-cyanobiphényl-4'-pentylbenzoate | 12,7 |
| 4,4'-Bis-(4-propyl-cyclohexyl)-biphényl | 5,9 |

**15.** Utilisation selon la revendication 1, **caractérisée en ce que** le mélange répond à la composition suivante :

| | % en masse |
|---|---|
| 4-pentyl-4'-cyanobiphényl | 22,6 |
| 4-heptyl-4'-cyanobiphényl | 15,7 |
| 3-fluoro-4-cyanophényl-4'-éthylbenzoate | 7,3 |
| 3-fluoro-4-cyanophényl-4'-propylbenzoate | 7,3 |
| 3-fluoro-4-cyanophényl-4'-butylbenzoate | 13,2 |
| 3-fluoro-4-cyanophényl-4'-pentylbenzoate | 14,7 |
| 3-fluoro-4-cyanophényl-4'-pentyl-5-phénylbenzoate | 13,2 |
| 4,4'-Bis-(4-propyl-cyclohexyl)-biphényl | 6,0 |

**16.** Utilisation selon la revendication 1, **caractérisée en ce que** le mélange répond à la composition suivante :

| | % en masse |
|---|---|
| 4-pentyl-4'-cyanobiphényl | 23,8 |
| 4-heptyl-4'-cyanobiphényl | 16,5 |
| 3-fluoro-4-cyanophényl-4'-éthylbenzoate | 7,2 |
| 3-fluoro-4-cyanophényl-4'-propylbenzoate | 7,2 |
| 3-fluoro-4-cyanophényl-4'-butylbenzoate | 13,3 |
| 3-fluoro-4-cyanophényl-4'-pentylbenzoate | 14,5 |
| 3-fluoro-4-cyanophényl-4'-pentyl phénylbenzoate | 11,6 |
| 4,4'-Bis-(4-propyl-cyclohexyl)-biphényl | 5,9 |

**17.** Utilisation selon la revendication 1, **caractérisée en ce que** le mélange répond à la composition suivante :

| | % en masse |
|---|---|
| 4-pentyl-4'-cyanobiphényl | 13,0 |
| 4-heptyl-4'-cyanobiphényl | 13,0 |
| 3-fluoro-4-cyanophényl-4'-éthylbenzoate | 6,3 |
| 3-fluoro-4-cyanophényl-4'-propylbenzoate | 10,8 |
| 3-fluoro-4-cyanophényl-4'-butylbenzoate | 12,1 |
| 3-fluoro-4-cyanophényl-4'-pentylbenzoate | 12,1 |
| 4-pentylphényl-4'-pentylcyclohexycarboxylate | 14,0 |
| 4-cyanophényl-4'-trans-butyl-cyclohexyl benzoate | 8,6 |
| 3-fluoro-4-cyanophényl-4'-trans-pentyl-cyclohexyl benzoate | 4,2 |
| 4,4'-Bis-(4-propyl-cyclohexyl-3-fluorobiphényl | 3,9 |
| 4,4'-Bis-(4-propyl-cyclohexyl)-biphényl | 2,7 |

**18.** Utilisation selon la revendication 1, **caractérisée en ce que** le mélange répond à la composition suivante :

| | % en masse |
|---|---|
| 4-pentyl-4'-cyanobiphényl | 14,3 |
| 4-heptyl-4'-cyanobiphényl | 10,4 |
| 3-fluoro-4-cyanophényl-4'-éthylbenzoate | 3,0 |
| 3-fluoro-4-cyanophényl-4'-propylbenzoate | 4,9 |
| 3-fluoro-4-cyanophényl-4'-butylbenzoate | 5,8 |
| 3-fluoro-4-cyanophényl-4'-pentylbenzoate | 6,4 |
| 4-pentyl-trans-cyclohexyl-benzoate-4'-phényl-carboxylate of 4-cyano-3-fluorobenzène | 5,4 |
| 4-pentylphényl-4'-propylcyclohexycarboxylate | 8,4 |
| 4-pentylphényl-4'-pentylcyclohexycarboxylate | 5,2 |
| 4-pentylphényl-4'-propylphénylcarboxylate | 12,1 |
| 4-pentylphényl-4'-pentylphényl carboxylate | 7,5 |
| 4,4'-Bis-(4-propyl-cyclohexyl)-biphényl | 4,2 |
| 4-propylcyclohexyl-4'-pentylcycloxyl biphényl | 4,1 |
| 4-propylphényléthynyl-4'-butyl phényl | 4,1 |
| 4-hexylcarboxyphényléthynyl-4'-hexylcarboxyl phényl | 4,2 |

**19.** Dispositif d'affichage bistable à cassure d'ancrage utilisant un mélange cristal liquide nématique à faible énergie d'ancrage zénithal, caracctérisé en ce que ledit mélange cristal liquide comprend :

a) au moins 40% en masse de composés de forte polarisabilité moléculaire ($\Delta\varepsilon_r$>10) et fort moment dipolaire ($\mu$> 1D) présentant cependant un ancrage zénithal faible, choisis parmi les composés de formule (AI, AII, AIII et AIV) qui suivent:

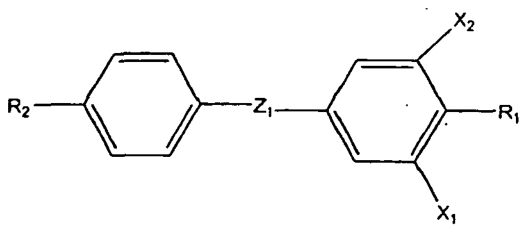

AI

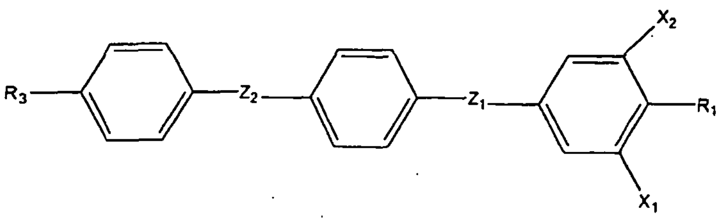

AII

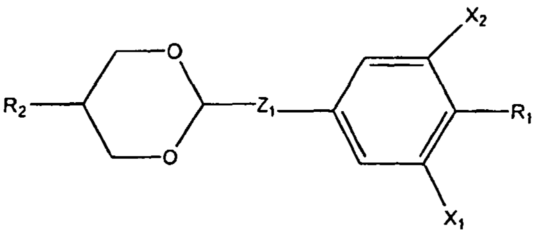

AIII

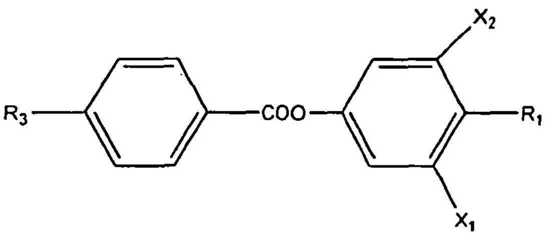

AIV

où :

$R_1$ est un groupement polaire -CN, -NCS, -F ou $-CF_3$,
$R_2$ est un groupement R-, RO- ou RCOO-, où R représente une chaîne alkyle de 1 à 12 atomes de carbone,
$R_3$ est un groupement R-, RO- ou RCOO-, où R représente une chaîne alkyle de 1 à 12 atomes de carbone ou un radical cycloaliphatique portant éventuellement une chaîne alkyle de 1 à 12 atomes de carbone,
$Z_1$ et $Z_2$ identiques ou différents, sont des groupements -C≡C-, $-CH_2-CH_2-$, -COO-, -OCO- ou de simples liaisons,
et $X_1$ et $X_2$ identiques ou différents, sont des atomes de fluor, de chlore ou d'hydrogène,

b) au plus environ 50% de composés à ancrage faible choisis parmi les composés de formule (BI, BII, EI, EII, FI et FII) qui suivent:

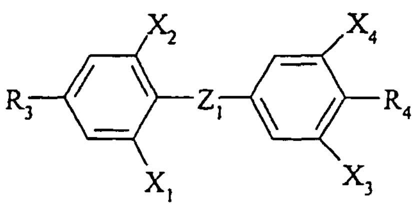

BI

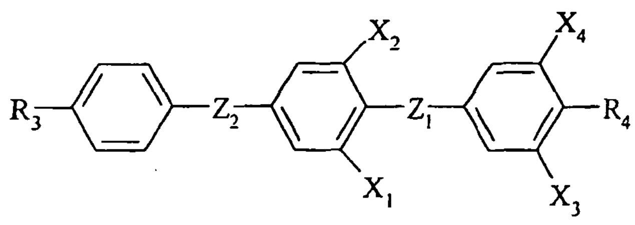

BII

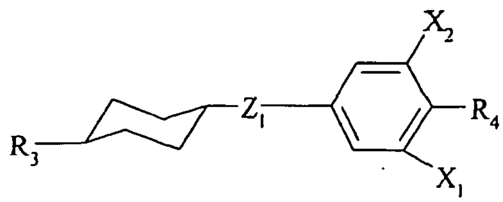

EI

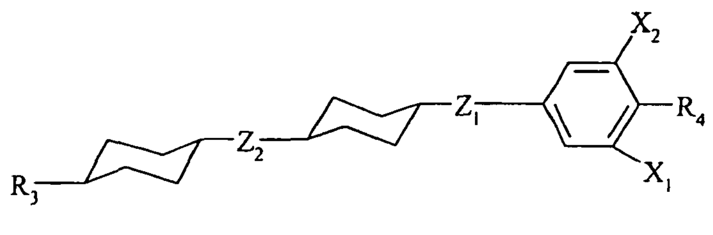

EII

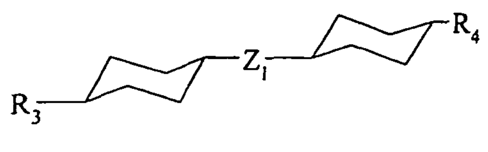

FI

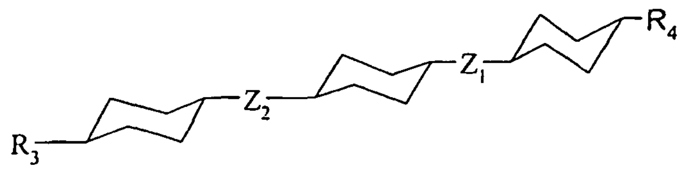

FII

où:

$R_3$ et $R_4$ identiques ou différents, sont des groupements R-, RO- ou RCOO- où R est une chaîne alkyle de 1 à 12 atomes de carbone ou un radical cycloaliphatique portant éventuellement une chaîne alkyle de 1 à 12 atomes de carbone,

$Z_1$ et $Z_2$ identiques ou différents, sont des groupements -C≡C-, $-CH_2-CH_2-$, -COO--OCO- ou de simples liaisons,

$X_1$ et $X_2$ identiques ou différents, sont des atomes de fluor, de chlore ou d'hydrogène,

$X_3$ et $X_4$ identiques ou différents, sont des atomes d'hydrogène ou d'halogène, notamment fluor ou chlore, ou des groupes R- ou RO- où R est une chaîne alkyle de 1 à 12 atomes de carbone,

c) au plus environ 20% en masse de composés comportant des dipôles choisis parmi les composés de formule (CI et CII) qui suivent:

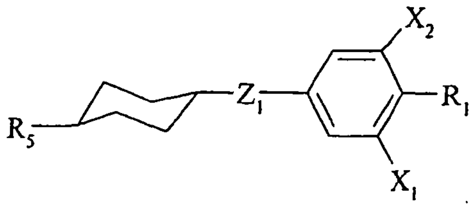

CI

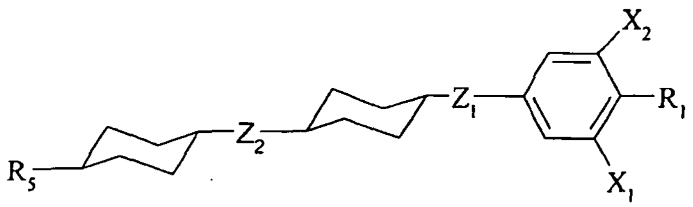

CII

où

$R_1$ est un groupement polaire -CN, -NCS, -F ou $-CF_3$,
$R_5$ est un groupement R- ou RCOO-, où R représente une chaîne alkyle de 1 à 12 atomes de carbone,
$Z_1$ et $Z_2$ identiques ou différents sont des groupements -C≡C-, $-CH_2-CH_2-$, -COO-, -OOC- ou de simples liaisons, et
$X_1$ et $X_2$ identiques ou différents, sont des atomes de fluor, de chlore ou d'hydrogène,

d) au plus environ 5% en masse de composé de formule DI et DII:

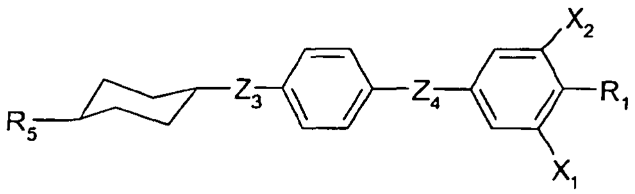

DI

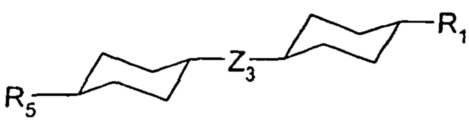

DII

où

$R_1$ est un groupement polaire -CN, -NCS, -F ou $-CF_3$,
$R_5$ est un groupement R- et RCOO-, où R représente une chaîne alkyle de 1 à 12 atomes de carbone,
$Z_3$ et $Z_4$ identiques ou différents, sont des groupements -C≡C-, $-CH_2-CH_2-$ ou de simples liaisons, et
$X_1$ et $X_2$ identiques ou différents, sont des atomes de fluor, de chlore ou d'hydrogène,

les proportions relatives de composés précités entrant dans la composition du mélange cristal liquide nématique étant déterminées pour obtenir simultanément les caractéristiques physiques suivantes dudit mélange:

- une température de transition nématique - liquide isotrope ($T_{N-1}$) du mélange cristal liquide supérieure ou égale à +50°C,
- une plage nématique $\Delta T_N$ du mélange cristal liquide supérieure ou égale à 50°C,
- une anisotropie diélectrique positive, supérieure ou égale à 8 $10^{-11}$ F/m (valeur mesurée à la température de

+20°C),
- un ancrage zénithal faible sur au moins l'une des plaques de l'afficheur bistable,

**caractérisé par** une tension de cassure $U_{\lambda/2}$ < 25 Volts pour une cellule d'épaisseur d telle que $\Delta n\ d$ = 295 nm, valeur mesurée à la température de +20°C.

**20.** Dispositif d'affichage bistable selon la revendication 19, **caractérisé en ce que**, dans ce dispositif, l'écran est un dispositif qui utilise deux textures, l'une uniforme ou faiblement tordue dans laquelle les molécules sont au moins sensiblement parallèles entre elles, et l'autre qui diffère de la première par une torsion de l'ordre de +/- 180°, la commutation entre ces deux textures se faisant par une cassure de l'ancrage sur au moins un des substrats.

**Claims**

**1.** Use of nematic liquid crystal mixture with weak zenithal anchoring energy for bistable display devices, said mixture comprising:

a) at least 40% by weight of compounds with strong molecular polarisability ($\Delta\varepsilon_r$ > 10) and strong dipole moment ($\mu$> 1D), however with weak zenithal anchoring, chosen from among compounds with the following formulas (AI, AII, AIII and AIV):

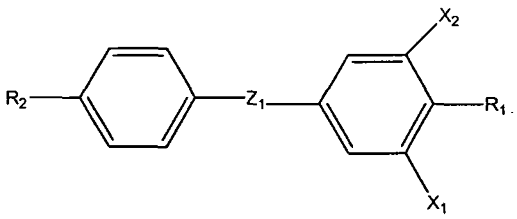

AI

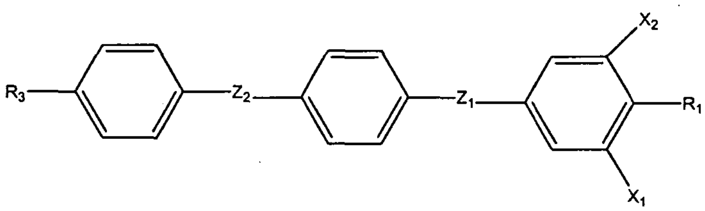

AII

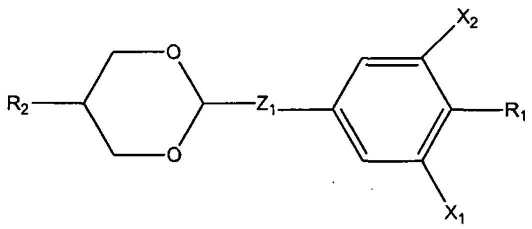

AIII

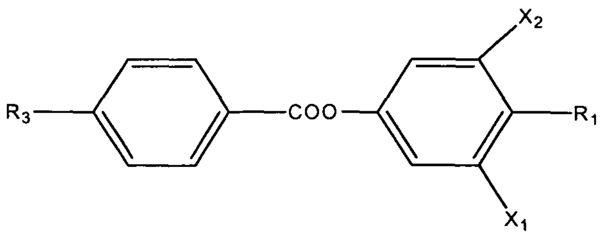

AIV

where:

$R_1$ is a -CN, -NCS, -F or $-CF_3$ polar group,
$R_2$ is an R-, RO- or -RCOO- group, where R represents an alkyl chain containing 1 to 12 carbon atoms,
$R_3$ is an R-, RO- or RCOO- group, where R is an alkyl chain containing 1 to 12 carbon atoms or a cycloaliphatic radical possibly containing an alkyl chain with 1 to 12 carbon atoms,
$Z_1$ and $Z_2$ are identical or different, and are -C≡C-, $-CH_2-CH_2-$, -COO-, -OCO- groups or simple bonds,
and $X_1$ and $X_2$ are identical or different, and are fluorine, chlorine or hydrogen atoms,

b) at the most about 50% by weight of compounds with weak anchoring chosen from among compounds with the following formulas (BI, BII, EI, EII, FI and FII):

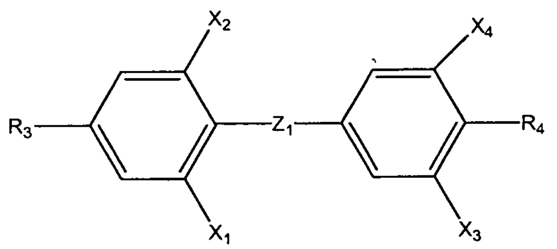

BI

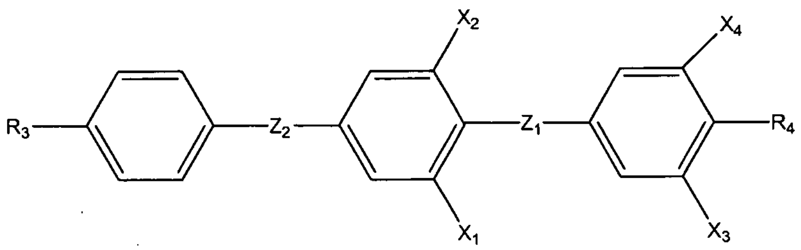

BII

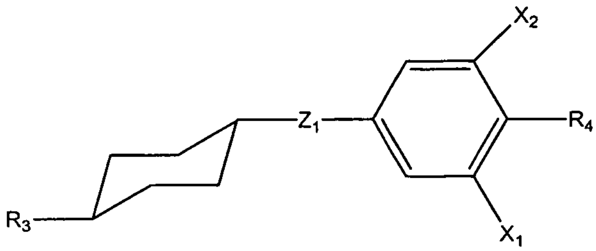

EI

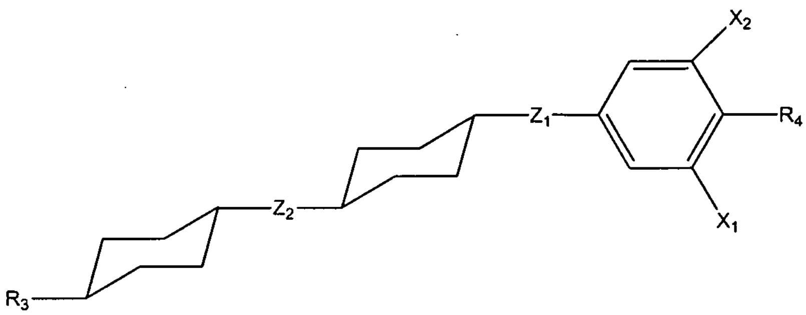

EII

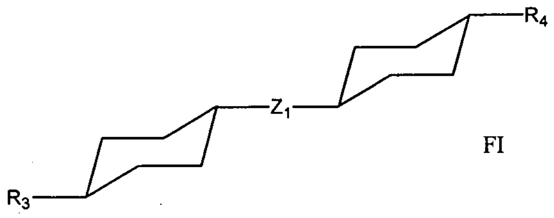

FI

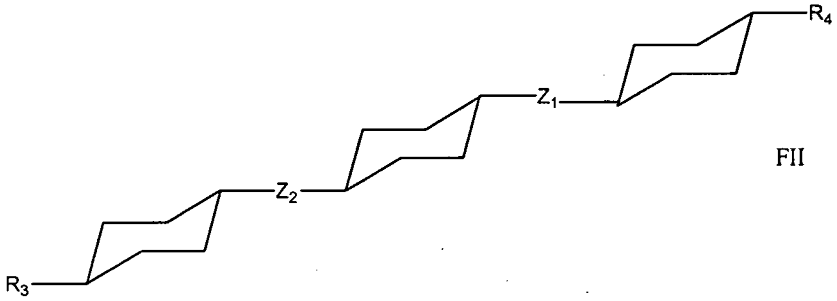

FII

where:

$R_3$ and $R_4$ are identical or different, and are R-, RO- or -RCOO- groups, where R represents an alkyl chain with 1 to 12 carbon atoms or a cycloaliphatic radical that may carry an alkyl chain with 1 to 12 carbon atoms,
$Z_1$ and $Z_2$ are identical or different, and are -C≡C-,-$CH_2$-$CH_2$-, -COO-, -OCO- groups, or simple bonds,
$X_1$ and $X_2$ are identical or different, and are atoms of fluorine, chlorine or hydrogen,
$X_3$ and $X_4$ are identical or different, and are hydrogen or halogen atoms, particularly fluorine or chlorine, or R- or RO- groups where R is an alkyl chain with 1 to 12 carbon atoms,

c) at the most about 20% by weight of compounds comprising dipoles chosen from among compounds with the following formulas (CI and CII):

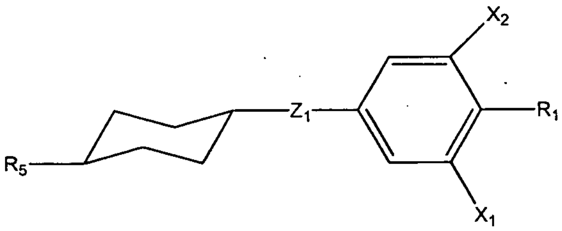

CI

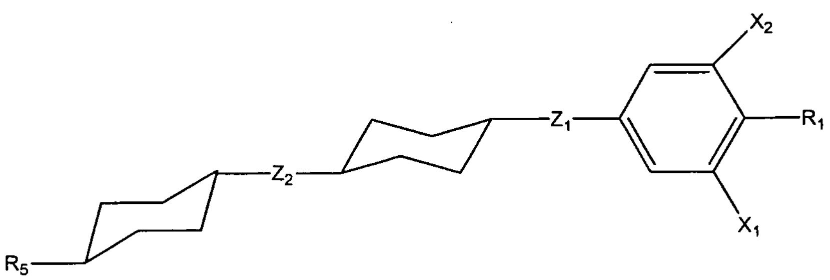

CII

where:

$R_1$ is a -CN, -NCS, -F or -$CF_3$ polar group,

$R_5$ is an R- or -RCOO- group, where R represents an alkyl chain containing 1 to 12 carbon atoms,
$Z_1$ and $Z_2$ are identical or different, and are -C≡C-, $-CH_2-CH_2-$, -COO-, -OOC- groups or simple bonds, and
$X_1$ and $X_2$ are identical or different, and are fluorine, chlorine or hydrogen atoms,

d) at the most about 5% by weight of compounds with the following formulas DI and DII:

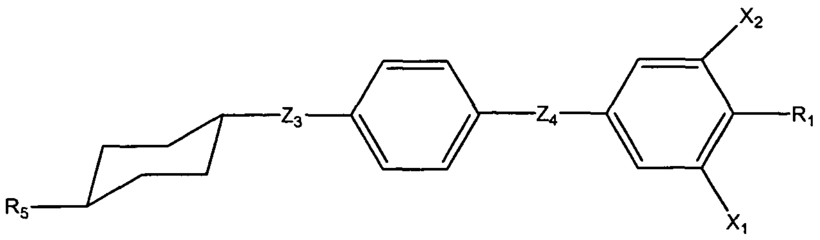

DI

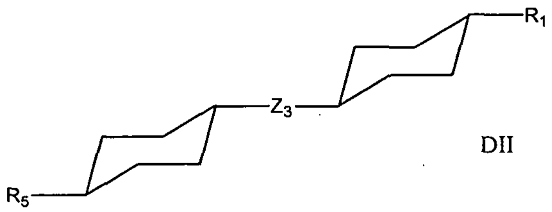

DII

where:

$R_1$ is a - CN-, -NCS, -F or $-CF_3$ polar group,
$R_5$ is an R- or -RCOO- group, where R represents an alkyl chain containing 1 to 12 carbon atoms,
$Z_3$ and $Z_4$ are identical or different, and are -C≡C-,$-CH_2-CH_2-$ groups or simple bonds, and
$X_1$ and $X_2$ are identical or different, and are atoms of fluorine, chlorine or hydrogen,

the relative proportions of the above-mentioned compounds used in the composition of the nematic liquid crystal mixture being determined to simultaneously obtain the following physical characteristics for the said mixture:

- a nematic - isotropic liquid transition temperature ($T_{N-I}$) of the liquid crystal mixture greater than or equal to +50°C,
- a nematic range $\Delta T_N$ of the liquid crystal mixture greater than or equal to 50°C,
- a positive dielectric anisotropy larger than or equal to $8 \times 10^{-11}$ F/m (value measured at a temperature of +20°C).
- a weak zenithal anchoring on at least one of the plates of the bistable display, **characterised by** a breaking voltage $U_{\lambda/2} < 25$ volts for a cell with thickness d such that $\Delta n\, d = 295$ nm, value measured at a temperature of +20°C.

**2.** Use according to claim 1, **characterised in that** the mixture comprises between 60% and 90% by weight of compounds with formulas AI, AII, AIII and AIV.

**3.** Use according to either claim 1 or 2, **characterised in that** the mixture contains practically no compounds with the CI or CII formula.

**4.** Use according to one of claims 1 to 3, **characterised in that** the mixture contains practically no compounds with the DI or DII formula.

**5.** Use according to one of claims 1 to 4, **characterised in that**:

- the compounds with formula AI are chosen from the group including 4 - ethyl - 4' - cyanobiphenyl, 4 - propyl - 4' - cyanobiphenyl, 4 - butyl - 4' - cyanobiphenyl, 4 - pentyl - 4' - cyanobiphenyl, 4 - hexyl - 4' - cyanobiphenyl, 4 - heptyl - 4' - cyanobiphenyl, 4 - cyanophenyl - 4' - ethylbenzoate, 4 - cyanophenyl - 4' - propylbenzoate, 4 - cyanophenyl - 4' - butylbenzoate, 4 - cyanophenyl - 4' - pentylbenzoate, 4 - cyanophenyl - 4'-hexylbenzoate, 4

- cyanophenyl - 4' - heptylbenzoate, 4 - cyanophenyl - 4' - octylbenzoate, 3 - fluoro - 4 - cyanophenyl - 4' - ethylbenzoate, 3 - fluoro - 4 - cyanophenyl - 4' - propylbenzoate, 3 - fluoro - 4 - cyanophenyl - 4' - butylbenzoate and 3 - fluoro - 4 - cyanophenyl - 4' - pentylbenzoate.
- the compounds with formula AII are chosen from the group comprising 4 - cyanobiphenyl - 4' - pentylbenzoate, 3 - fluoro - 4 - cyanophenyl - 4' - trans - pentyl - phenylbenzoate, 3 - fluoro - 4 - cyanophenyl - 4' - trans - pentyl - cyclohexyl - phenyl - carboxy - benzoate and 4 - pentyl - 4' - cyanoterphenyl.
- the compounds with formula AIII are chosen from the group comprising 4 - (5 - propyl - [1.3] dioxane - 2 - yl) - cyanobenzene and 4 - (5 - pentyl - [1.3] dioxane - 2 - yl) - cyanobenzene.
- the compounds with formula AIV are chosen from the group comprising 4 - cyanophenyl - 4' - trans - propyl - cyclohexyl - benzoate, 4 - cyanophenyl - 4' - trans - butyl - cyclohexyl - benzoate, 4 - cyanophenyl - 4' - trans - pentyl - cyclohexyl - benzoate, 3 - fluoro - 4 - cyanophenyl - 4' - trans - ethyl - cyclohexyl - carboxy - benzoate, 3 - fluoro - 4 - cyanophenyl - 4' - trans - propyl - cyclohexyl - carboxy - benzoate, 3 - fluoro - 4 - cyanophenyl - 4' - trans - butyl - cyclohexyl - carboxy - benzoate and 3 - fluoro - 4 - cyanophenyl - 4' - trans - pentyl - cyclohexyl - carboxy - benzoate.

**6.** Use according to one of claims 1 to 5, **characterised in that** the compounds with formula BI are chosen from the group comprising 4,4' - Bis - (4 - propylcyclohexyl) - 3 - fluorobiphenyl, 4,4' - Bis - (4 - propylcyclohexyl) - biphenyl and 4' - (4 - pentyl - cyclohexyl) - 4 - (4 - propyl - cyclohexyl) - biphenyl.

**7.** Use according to one of claims 1 to 6, **characterised in that** the compound with formula EI is 4 - pentylphenyl - 4' - trans - pentylcyclohexycarboxylate.

**8.** Use according to claim 1, **characterised in that** the composition of the mixture is as follows:

| | % by weight |
|---|---|
| 4-ethyl-4'-cyanobiphenyl | 6.4 |
| 4-propyl-4'-cyanobiphenyl | 4.1 |
| 4-pentyl-4'-cyanobiphenyl | 35.7 |
| 4-heptyl-4'-cyanobiphenyl | 19.1 |
| 4-cyanophenyl-4'-ethylbenzoate | 3.6 |
| 4-cyanophenyl-4'-propylbenzoate | 2.9 |
| 4-cyanophenyl-4'-pentylbenzoate | 5.1 |
| 3-fluoro-4-cyanophenyl-4'-trans-pentyl-cyclohexyl-carboxy-benzoate | 18.4 |
| 3-fluoro-4-cyanophenyl-4'-trans-pentyl-cyclohexyl-phenyl-carboxy-benzoate | 4.7 |

**9.** Use according to claim 1, **characterised in that** the composition of the mixture is as follows:

| | % by weight |
|---|---|
| 4-pentyl-4'-cyanobiphenyl | 23.1 |
| 4-heptyl-4'-cyanobiphenyl | 16.1 |
| 4-cyanophenyl-4'-ethylbenzoate | 7.2 |
| 4-cyanophenyl-4'-propylbenzoate | 7.2 |
| 4-cyanophenyl-4'-butylbenzoate | 13.1 |
| 4-cyanophenyl-4'-pentylbenzoate | 14.5 |
| 3-fluoro-4-cyanophenyl-4'-pentyl-phenylbenzoate | 12.6 |
| 3-fluoro-4-cyanophenyl-4'-trans-pentyl-cyclohexyl-phenyl-carboxy-benzoate | 6.2 |

**10.** Use according to claim 1, **characterised in that** the composition of the mixture is as follows:

| | % by weight |
|---|---|
| 4-pentyl-4'-cyanobiphenyl | 23.7 |
| 4-heptyl-4'-cyanobiphenyl | 16.5 |

(continued)

| | % by weight |
|---|---|
| 3-fluoro-4-cyanophenyl-4'-ethylbenzoate | 6.9 |
| 3-fluoro-4-cyanophenyl-4'-propylbenzoate | 6.9 |
| 3-fluoro-4-cyanophenyl-4'-butylbenzoate | 12.8 |
| 3-fluoro-4-cyanophenyl-4'-pentylbenzoate | 13.9 |
| 4-cyanobiphenyl-4'-pentylbenzoate | 13.2 |
| 3-fluoro-4-cyanophenyl-4'-trans-pentyl-cyclohexyl-phenyl-carboxy-benzoate | 6.1 |

**11.** Use according to claim 1, **characterised in that** the composition of the mixture is as follows:

| | % by weight |
|---|---|
| 4-pentyl-4'-cyanobiphenyl | 21.8 |
| 4-heptyl-4'-cyanobiphenyl | 15.2 |
| 3-fluoro-4-cyanophenyl-4'-ethylbenzoate | 7.3 |
| 3-fluoro-4-cyanophenyl-4'-propylbenzoate | 7.3 |
| 3-fluoro-4-cyanophenyl-4'-butylbenzoate | 13.3 |
| 3-fluoro-4-cyanophenyl-4'-pentylbenzoate | 14.7 |
| 3-fluoro-4-cyanophenyl-4'-pentylphenylbenzoate | 13.7 |
| 4-pentyl-trans-cyclohexyl-benzoate-4'-phenyl-carboxylate of 4-cyano-3-fluorobenzene | 6.7 |

**12.** Use according to claim 1, **characterised in that** the composition of the mixture is as follows:

| | % by weight |
|---|---|
| 4-Ethyl-4'-cyanobiphenyl | 8.5 |
| 4-butyl-4'-cyanobiphenyl | 4.2 |
| 4-pentyl-4'-cyanobiphenyl | 29.8 |
| 4-pentyl-4'-cyanoterphenyl | 3.5 |
| 3-fluoro-4-cyanophenyl-4'-ethylbenzoate | 8 |
| 3-fluor.o-4-cyanophenyl-4'-butylbenzoate | 16 |
| 3-fluoro-4-cyanophenyl-4'-pentylbenzoate | 8 |
| 3-fluoro-4-cyanophenyl-4'-trans-pentyl-phenylbenzoate | 14 |
| 3-fluoro-4-cyanophenyl-4'-trans-pentyl cyclohexylbenzoate | 4 |
| 3-fluoro-4-cyanophenyl-4'-trans-cyclohexyl-carboxybenzoate | 4 |

**13.** Use according to claim 1, **characterised in that** the composition of the mixture is as follows:

| | % by weight |
|---|---|
| 4-ethyl-4'-cyanobiphenyl | 12.2 |
| 4-propyl-4'-cyanobiphenyl | 7.0 |
| 4-pentyl-4'-cyanobiphenyl | 29.2 |
| 4-heptyl-4'-cyanobiphenyl | 15.9 |
| 4-(5-propyl-[1.3]dioxane-2-yl)-cyanobenzene | 6.7 |
| 4-(5-pentyl-[1.3]dioxane-2-yl)-cyanobenzene | 10.7 |
| 4,4'-Bis-(4-propyl-cyclohexyl)-3-fluorobiphenyl | 4.2 |
| 4,4'-Bis-(4-propyl-cyclohexyl)-biphenyl | 6.1 |
| 4'-(4-pentyl-cyclohexyl)-4-(4-propyl-cyclohexyl)-biphenyl | 8.0 |

**14.** Use according to claim 1, **characterised in that** the composition of the mixture is as follows:

| | % by weight |
|---|---|
| 4-pentyl-4'-cyanobiphenyl | 23.2 |
| 4-heptyl-4'-cyanobiphenyl | 16.1 |
| 3-fluoro-4-cyanophenyl-4'-ethylbenzoate | 7.2 |
| 3-fluoro-4-cyanophenyl-4'-propylbenzoate | 7.2 |
| 3-fluoro-4-cyanophenyl-4'-butylbenzoate | 13.2 |
| 3-fluoro-4-cyanophenyl-4'-pentylbenzoate | 14.5 |
| 4-cyanobiphenyl-4'-pentylbenzoate | 12.7 |
| 4,4'-Bis-(4-propyl-cyclohexyl)-biphenyl | 5.9 |

**15.** Use according to claim 1, **characterised in that** the composition of the mixture is as follows:

| | % by weight |
|---|---|
| 4-pentyl-4'-cyanobiphenyl | 22.6 |
| 4-heptyl-4'-cyanobiphenyl | 15.7 |
| 3-fluoro-4-cyanophenyl-4'-ethylbenzoate | 7.3 |
| 3-fluoro-4-cyanophenyl-4'-propylbenzoate | 7.3 |
| 3-fluoro-4-cyanophenyl-4'-butylbenzoate | 13.2 |
| 3-fluoro-4-cyanophenyl-4'-pentylbenzoate | 14.7 |
| 3-fluoro-4-cyanophenyl-4'-pentyl-5-phenylbenzoate | 13.2 |
| 4,4'-Bis-(4-propyl-cyclohexyl)-biphenyl | 6.0 |

**16.** Use according to claim 1, **characterised in that** the composition of the mixture is as follows:

| | % by weight |
|---|---|
| 4-pentyl-4'-cyanobiphenyl | 23.8 |
| 4-heptyl-4'-cyanobiphenyl | 16.5 |
| 3-fluoro-4-cyanophenyl-4'-ethylbenzoate | 7.2 |
| 3-fluoro-4-cyanophenyl-4'-propylbenzoate | 7.2 |
| 3-fluoro-4-cyanophenyl-4'-butylbenzoate | 13.3 |
| 3-fluoro-4-cyanophenyl-4'-pentylbenzoate | 14.5 |
| 3-fluoro-4-cyanophenyl-4'-pentyl phenylbenzoate | 11.6 |
| 4,4'-Bis-(4-propyl-cyclohexyl)-biphenyl | 5.9 |

**17.** Use according to claim 1, **characterised in that** the composition of the mixture is as follows:

| | % by weight |
|---|---|
| 4-pentyl-4'-cyanobiphenyl | 13.0 |
| 4-heptyl-4'-cyanobiphenyl | 13.0 |
| 3-fluoro-4-cyanophenyl-4'-ethylbenzoate | 6.3 |
| 3-fluoro-4-cyanophenyl-4'-propylbenzoate | 10.8 |
| 3-fluoro-4-cyanophenyl-4'-butylbenzoate | 12.1 |
| 3-fluoro-4-cyanophenyl-4'-pentylbenzoate | 12.1 |
| 4-pentylphenyl-4'-pentylcyclohexycarboxylate | 14.0 |
| 4-cyanophenyl-4'-trans-butyl-cyclohexyl benzoate | 8.6 |
| 3-fluoro-4-cyanophenyl-4'-trans-pentyl-cyclohexyl benzoate | 4.2 |
| 4,4'-Bis-(4-propyl-cyclohexyl-3-fluorobiphenyl | 3.9 |
| 4,4'-Bis-(4-propyl-cyclohexyl)-biphenyl | 2.7 |

**18.** Use according to claim 1, **characterised in that** the composition of the mixture is as follows:

| | % by weight |
|---|---|
| 4-pentyl-4'-cyanobiphenyl | 14.3 |
| 4-heptyl-4'-cyanobiphenyl | 10.4 |
| 3-fluoro-4-cyanophenyl-4'-ethylbenzoate | 3.0 |
| 3-fluoro-4-cyanophenyl-4'-propylbenzoate | 4.9 |
| 3-fluoro-4-cyanophenyl-4'-butylbenzoate | 5.8 |
| 3-fluoro-4-cyanophenyl-4'-pentylbenzoate | 6.4 |
| 4-pentyl-trans-cyclohexyl-benzoate-4'-phenyl-carboxylate of 4-cyano-3-fluorobenzene | 5.4 |
| 4-pentylphenyl-4'-propylcyclohexycarboxylate | 8.4 |
| 4-pentylphenyl-4'-pentylcyclohexycarboxylate | 5.2 |
| 4-pentylphenyl-4'-propylphenylcarboxylate | 12.1 |
| 4-pentylphenyl-4'-pentylphenylcarboxylate | 7.5 |
| 4,4'-Bis-(4-propyl-cyclohexyl)-biphenyl | 4.2 |
| 4-propylcyclohexyl-4'-pentylcycloxyl biphenyl | 4.1 |
| 4-propylphenylethynyl-4'-butyl phenyl | 4.1 |
| 4-hexylcarboxyphenylethynyl-4'-hexylcarboxyl phenyl | 4.2 |

**19.** Bistable display device with anchoring breaking using a nematic liquid crystal mixture with weak zenithal anchoring energy, **characterised in that** said liquid crystal mixture comprises:

a) at least 40% by weight of compounds with strong molecular polarisability ($\Delta\varepsilon_r$>10) and strong dipole moment ($\mu$ > 1D), however with weak zenithal anchoring, chosen from among compounds with the following formulas (AI, AII, AIII and AIV):

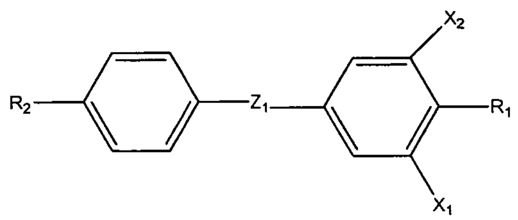

AI

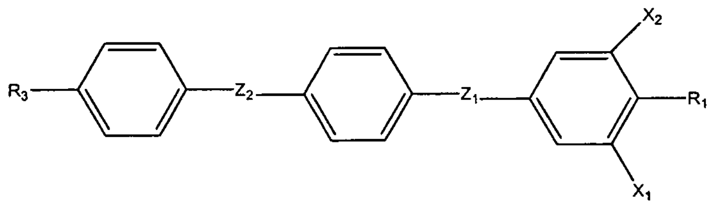

AII

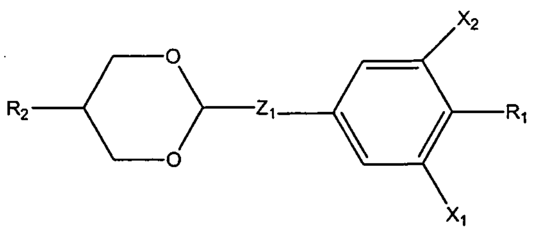

AIII

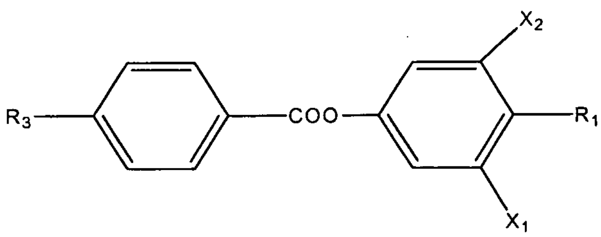

AIV

where:

$R_1$ is a -CN, -NCS, -F or -$CF_3$ polar group,
$R_2$ is an R-, RO- or -RCOO- group, where R represents an alkyl chain containing 1 to 12 carbon atoms,
$R_3$ is an R-, RO- or RCOO- group, where R is an alkyl chain containing 1 to 12 carbon atoms or a cycloaliphatic radical possibly containing an alkyl chain with 1 to 12 carbon atoms,
$Z_1$ and $Z_2$ are identical or different, and are -C≡C-, -$CH_2$-$CH_2$-, -COO-, -OCO- groups or simple bonds,
and $X_1$ and $X_2$ are identical or different, and are fluorine, chlorine or hydrogen atoms,

b) at the most about 50% by weight of compounds with weak anchoring chosen from among compounds with the following formulas (BI, BII, EI, EII, FI and FII):

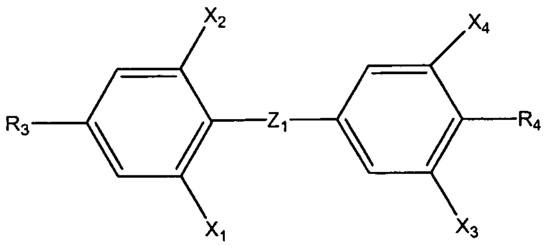

BI

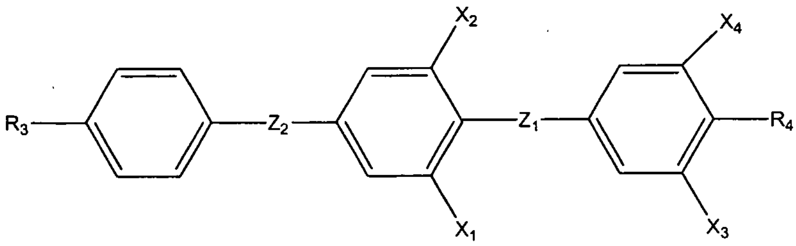

BII

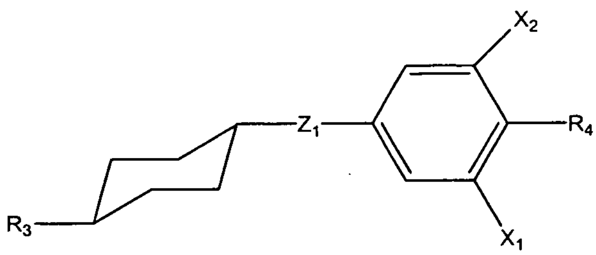

EI

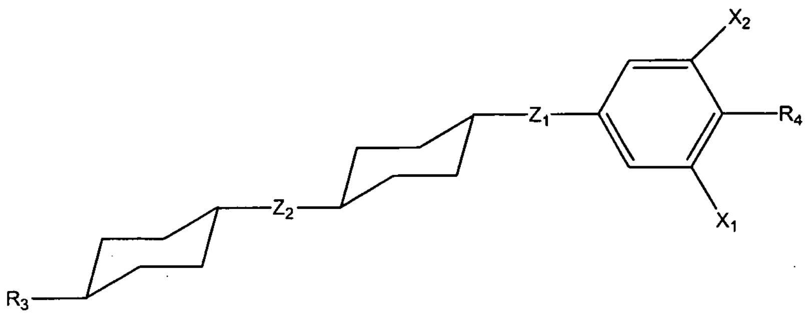

EII

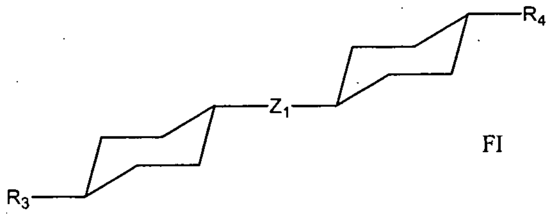

FI

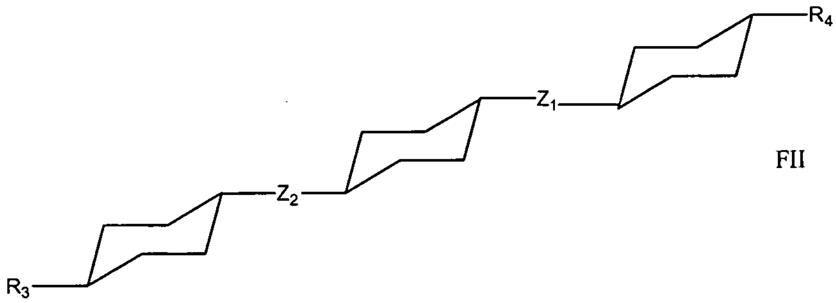

FII

where:

$R_3$ and $R_4$ are identical or different, and are R-, RO- or -RCOO- groups, where R represents an alkyl chain with 1 to 12 carbon atoms or a cycloaliphatic radical that may carry an alkyl chain with 1 to 12 carbon atoms, $Z_1$ and $Z_2$ are identical or different, and are -C≡C-,$-CH_2-CH_2-$, -COO-, -OCO- groups, or simple bonds, $X_1$ and $X_2$ are identical or different, and are atoms of fluorine, chlorine or hydrogen, $X_3$ and $X_4$ are identical or different, and are hydrogen or halogen atoms, particularly fluorine or chlorine, or R- or RO- groups where R is an alkyl chain with 1 to 12 carbon atoms,

c) at the most about 20% by weight of compounds comprising dipoles chosen from among compounds with the following formulas (CI and CII):

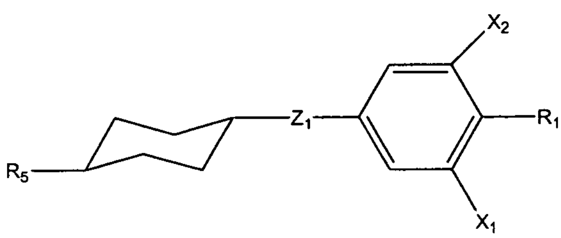

CI

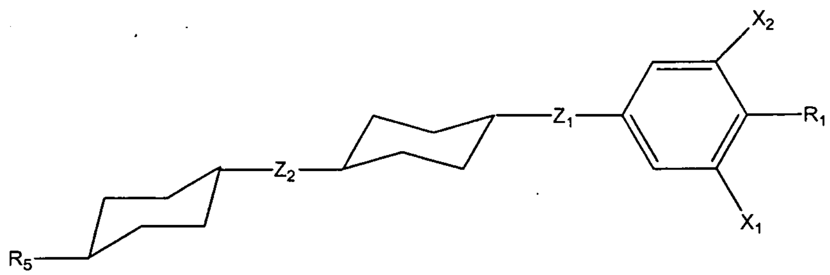

CII

where:

$R_1$ is a -CN, -NCS, -F or -$CF_3$ polar group,
$R_5$ is an R- or -RCOO- group, where R represents an alkyl chain containing 1 to 12 carbon atoms,
$Z_1$ and $Z_2$ are identical or different, and are -C≡C-, -$CH_2$-$CH_2$-, -COO-, -OOC- groups or simple bonds, and
$X_1$ and $X_2$ are identical or different, and are fluorine, chlorine or hydrogen atoms,

d) at the most about 5% by weight of compounds with the following formulas DI and DII:

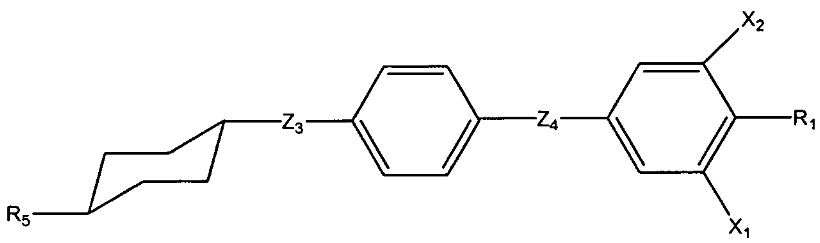

DI

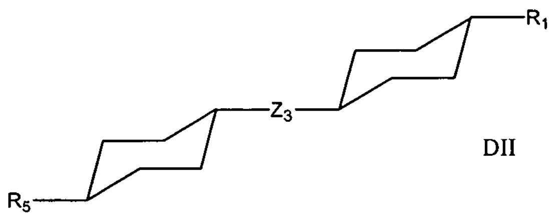

DII

where:

$R_1$ is a - CN-, -NCS, -F or -$CF_3$ polar group,
$R_5$ is an R- or -RCOO- group, where R represents an alkyl chain containing 1 to 12 carbon atoms,
$Z_3$ and $Z_4$ are identical or different, and are -C≡C-,-$CH_2$-$CH_2$- groups or simple bonds, and
$X_1$ and $X_2$ are identical or different, and are atoms of fluorine, chlorine or hydrogen, the relative proportions of the above-mentioned compounds used in the composition of the nematic liquid crystal mixture being determined to simultaneously obtain the following physical characteristics for the said mixture:

- a nematic - isotropic liquid transition temperature ($T_{N-I}$) of the liquid crystal mixture greater than or equal to +50°C,
- a nematic range $\Delta T_N$ of the liquid crystal mixture greater than or equal to 50°C,
- a positive dielectric anisotropy larger than or equal to 8 x $10^{-11}$ F/m (value measured at a temperature of +20°C).
- a weak zenithal anchoring on at least one of the plates of the bistable display, **characterised by** a breaking voltage $U_{\lambda/2}$ < 25 volts for a cell with thickness d such that $\Delta n\ d$ = 295 nm, value measured at a temperature of +20°C.

**20.** Bistable display device according to claim 19, **characterised in that** in this device, the screen is a device that uses

two textures, one uniform or slightly twisted texture in which the molecules are at least approximately parallel to each other, and the other that differs from the first by a twist of +/-180°, switching between these two textures being made by breaking the anchoring on at least one of the substrates.

## Patentansprüche

1. Verwendung einer nematischen Flüssigkristallmischung mit schwacher zenitaler Verankerungsenergie in einer bistabilen Anzeigevorrichtung mit Verankerungsbruch, wobei die Mischung umfasst:

a) mindestens 40 Massen-% von Verbindungen mit starker molekularer Polarisierbarkeit ($\Delta\varepsilon_r$>10) und starkem Dipolmoment ($\mu$>1D), die jedoch eine schwache zenitale Verankerung aufweist und aus den Verbindungen der Formel (AI, AII, AIII und AIV), die folgen, ausgewählt sind:

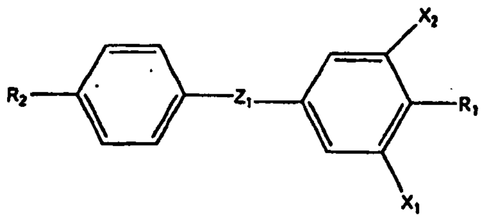

AI

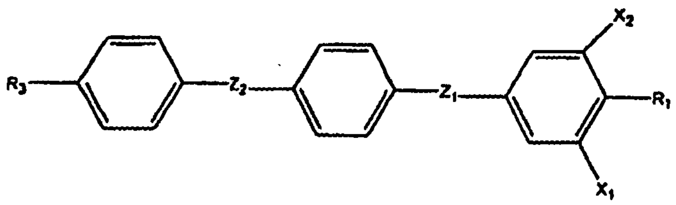

AII

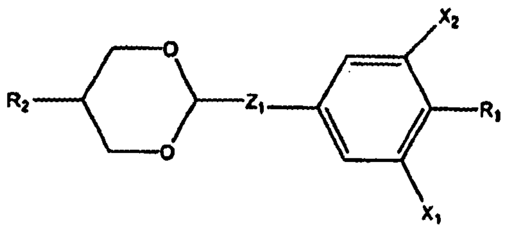

AIII

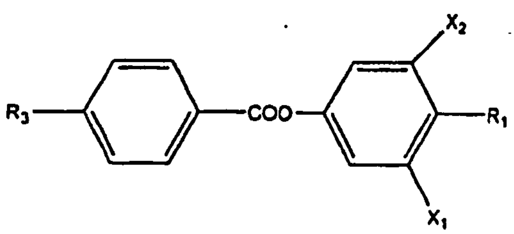

AIV

worin:

$R_1$ eine polare Gruppe -CN, -NCS, -F oder -$CF_3$ ist,
$R_2$ eine Gruppe R-, RO- oder RCOO- ist, worin R eine Alkylkette mit 1 bis 12 Kohlenstoffatomen darstellt,
$R_3$ eine Gruppe R-, RO- oder RCOO- ist, worin R eine Alkylkette mit 1 bis 12 Kohlenstoffatomen oder einen cycloaliphatischen Rest darstellt, der gegebenenfalls eine Alkylkette mit 1 bis 12 Kohlenstoffatomen trägt,

$Z_1$ und $Z_2$, identisch oder verschieden, die Gruppen -C≡C-, $-CH_2-CH_2-$, -COO-, -OCO- oder Einfachbindungen sind
und $X_1$ und $X_2$, identisch oder verschieden, Fluor-, Chlor- oder Wasserstoffatome sind,

b) höchstens etwa 50 % an Verbindungen mit schwacher Verankerung, die ausgewählt sind aus den Verbindungen der Formel (BI, BII, EI, EII, FI und FII), die folgen:

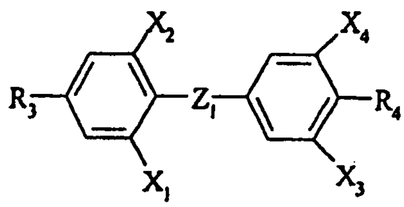

BI

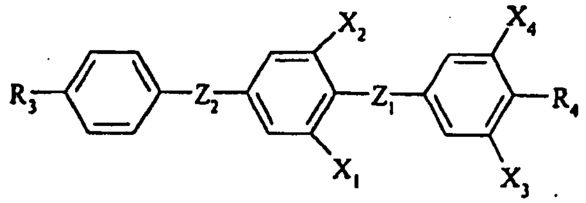

BII

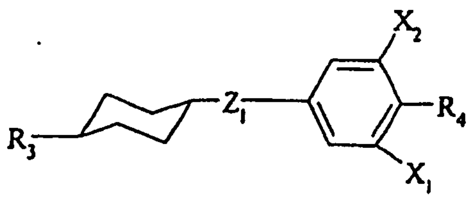

EI

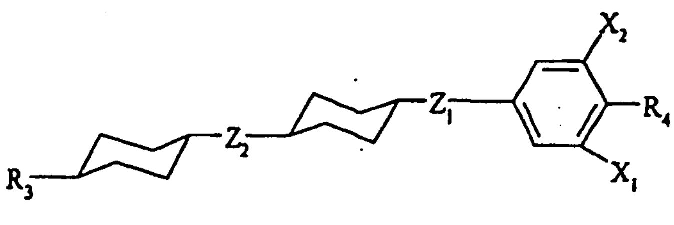

EII

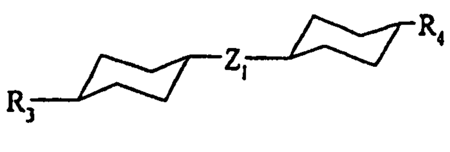

FI

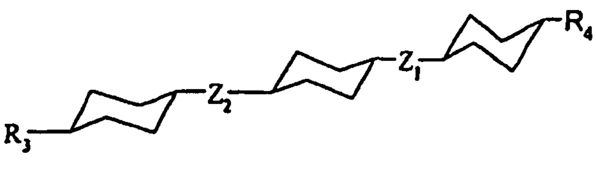

FII

worin:

$R_3$ und $R_4$, identisch oder verschieden, Gruppen R-, RO- oder RCOO- sind, worin R eine Alkylkette mit 1 bis 12 Kohlenstoffatomen oder ein cycloaliphatischer Rest ist, der gegebenenfalls eine Alkylkette mit 1 bis 12 Kohlenstoffatomen trägt,
$Z_1$ und $Z_2$, identisch oder verschieden, Gruppen -C≡C, $-CH_2-CH_2-$, -COO-, -OCO- oder Einfachbindungen sind,
$X_1$ und $X_2$, identisch oder verschieden, Fluor-, Chlor- oder Wasserstoffatome sind,
$X_3$ und $X_4$, identisch oder verschieden, Wasserstoff- oder Halogen-, insbesondere Fluor- oder Chloratome, oder Gruppen R- oder ROsind, worin R eine Alkylkette mit 1 bis 12 Kohlenstoffatomen ist,

c) höchstens etwa 20 Massen-% an Verbindungen, die Dipole enthalten und ausgewählt sind aus den Verbindungen der Formel (CI und CII), die folgen:

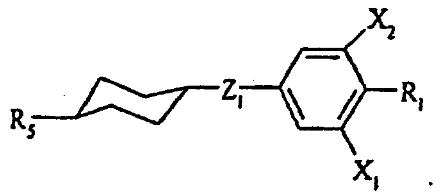

CI

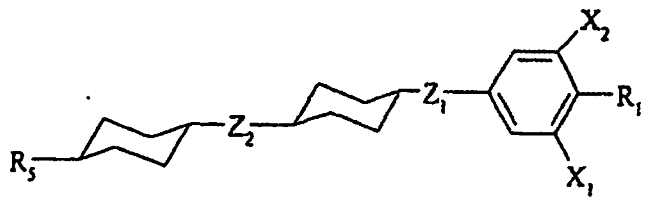

CII

worin

$R_1$ eine polare Gruppe -CN, -NCS, -F oder $-CF_3$ ist,
$R_5$ eine Gruppe R- oder RCOO- ist, worin R eine Alkylkette mit 1 bis 12 Kohlenstoffatomen darstellt,
$Z_1$ und $Z_2$, identisch oder verschieden, Gruppen -C≡C-, $-CH_2-CH_2-$, -COO-, -OOC- oder Einfachbindungen sind und
$X_1$ und $X_2$, identisch oder verschieden, Fluor-, Chlor- oder Wasserstoffatome sind,

d) höchstens etwa 5 Massen-% an Verbindung der Formel DI und DII:

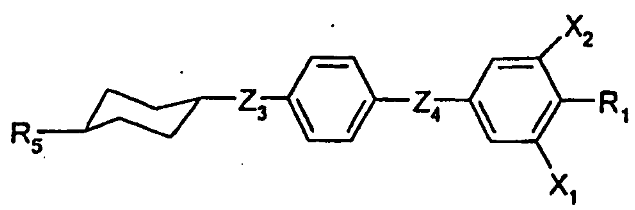

DI

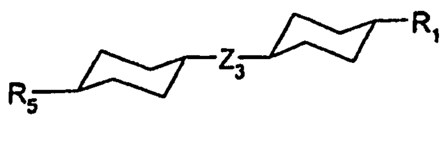

DII

worin

$R_1$ eine polare Gruppe -CN, -NCS, -F oder $-CF_3$ ist,
$R_5$ eine Gruppe R- oder RCOO- ist, worin R eine Alkylkette mit 1 bis 12 Kohlenstoffatomen darstellt,
$Z_3$ und $Z_4$, identisch oder verschieden, Gruppen -C≡C-, $-CH_2-CH_2-$ oder Einfachbindungen sind und
$X_1$ und $X_2$, identisch oder verschieden, Fluor-, Chlor- oder Wasserstoffatome sind,

wobei die relativen Anteile an vorstehend genannten Verbindungen, welche in die Zusammensetzung der nematischen Flüssigkristallmischung eingehen, so bestimmt sind, dass man gleichzeitig die folgenden physikalischen Charakteristika der Mischung erhält:

- eine Übergangstemperatur nematisch - isotrope Flüssigkeit ($T_{N-1}$) der Flüssigkristallmischung größer oder gleich +50°C,
- einen nematischen Bereich $\Delta T_N$ der Flüssigkristallmischung größer oder gleich 50°C,
- eine positive dielektrische Anisotropie von mehr als oder gleich $8.10^{-11}$ F/m (Wert gemessen bei der Temperatur +20°C),
- eine schwache zenitale Verankerung auf mindestens einer der Platten der bistabilen Anzeige, **gekennzeichnet durch** eine Bruchspannung $U_{\lambda/2}$ < 25 Volt bei einer Zelle mit einer Dicke *d* entsprechend $\Delta n\ d$ = 295 nm, wobei der Wert bei einer Temperatur von +20°C gemessen ist.

**2.** Verwendung nach Anspruch 1, **dadurch gekennzeichnet, dass** die Mischung zwischen 60 und 90 Massen-% der Verbindungen der Formel AI, AII, AIII und AIV umfasst.

**3.** Verwendung nach einem der Ansprüche 1 und 2, **dadurch gekennzeichnet, dass** die Mischung praktisch frei von Verbindungen der Formeln CI und CII ist.

**4.** Verwendung nach einem der Ansprüche 1 bis 3, **dadurch gekennzeichnet, dass** die Mischung praktisch frei von Verbindungen der Formeln DI und DII ist.

**5.** Verwendung nach einem der Ansprüche 1 bis 4, **dadurch gekennzeichnet, dass**

- die Verbindungen der Formel AI ausgewählt sind aus der Gruppe umfassend 4-Ethyl-4'-cyanobiphenyl, 4-Propyl-4'-cyanobiphenyl, 4-Butyl-4'-cyanobiphenyl, 4-Pentyl-4'-cyanobiphenyl, 4-Hexyl-4'-cyanobiphenyl, 4-Heptyl-4'-cyanobiphenyl, 4'-Cyanophenyl-4'-ethylbenzoat, 4-Cyanophenyl-4'-propylbenzoat, 4-Cyanophenyl-4'-butylbenzoat, 4-Cyanophenyl-4'-pentylbenzoat, 4-Cyanophenyl-4'-hexylbenzoat, 4-Cyanophenyl-4'-heptylbenzoat, 4-Cyanophenyl-4'-octylbenzoat, 3-Fluor-4-cyanophenyl-4'-ethylbenzoat, 3-Fluor-4-cyanophenyl-4'-propylbenzoat, 3-Fluor-4-cyanophenyl-4'-butylbenzoat, 3-Fluor-4-cyanophenyl-4'-pentylbenzoat,
- die Verbindungen der Formel AII ausgewählt sind aus der Gruppe umfassend 4-Cyanobiphenyl-4'-pentylbenzoat, 3-Fluor-4-cyanophenyl-4'-trans-pentylphenylbenzoat, 3-Fluor-4-cyanophenyl-4'-trans-pentylcyclohexylphenylcarboxybenzoat und 4-Pentyl-4'-cyanoterphenyl,
- die Verbindungen der Formel AIII ausgewählt sind aus der Gruppe umfassend 4-(5-Propyl-[1,3]dioxan-2-yl) cyanobenzol und 4-(5-Pentyl-[1,3]dioxan-2-yl)cyanobenzol,
- die Verbindungen der Formel AIV ausgewählt sind aus der Gruppe umfassend 4-Cyanophenyl-4'-trans-propylcyclohexylbenzoat, 4-Cyanophenyl-4'-trans-butylcyclohexylbenzoat, 4-Cyanophenyl-4'-trans-pentylcyclohexylbenzoat, 3-Fluor-4-cyanophenyl-4'-trans-ethyl-cyclohexylcarboxybenzoat, 3-Fluor-4-cyanophenyl-4'-trans-propyl-cyclohexylcarboxybenzoat, 3-Fluor-4-cyanophenyl-4'-trans-butyl-cyclohexylcarboxybenzoat und 3-Fluor-4-cyanophenyl-4'-trans-pentylcyclohexylcarboxybenzoat.

**6.** Verwendung nach einem der Ansprüche 1 bis 5, **dadurch gekennzeichnet, dass** die Verbindungen der Formel BI ausgewählt sind aus der Gruppe umfassend 4,4'-Bis(4-propylcyclohexyl)-3-fluorbiphenyl, 4,4'-Bis(4-propylcyclohexyl)biphenyl und 4'-(4-Pentylcyclohexyl)-4-(4-propylcyclohexyl)-biphenyl.

**7.** Verwendung nach einem der Ansprüche 1 bis 6, **dadurch gekennzeichnet, dass** die Verbindung der Formel EI 4-Pentylphenyl-4'-trans-pentyl-cyclohexylcarboxylat ist.

**8.** Verwendung nach Anspruch 1, **dadurch gekennzeichnet, dass** die Mischung der folgenden Zusammensetzung entspricht:

| | Massen-% |
|---|---|
| 4-Ethyl-4'-cyanobiphenyl | 6,4 |
| 4-Propyl-4'-cyanobiphenyl | 4,1 |
| 4-Pentyl-4'-cyanobiphenyl | 35,7 |
| 4-Heptyl-4'-cyanobiphenyl | 19,1 |
| 4-Cyanophenyl-4'-ethylbenzoat | 3,6 |
| 4-Cyanophenyl-4'-propylbenzoat | 2,9 |
| 4-Cyanophenyl-4'-pentylbenzoat | 5,1 |
| 3-Fluor-4-cyanophenyl-4'-trans-pentylcyclohexyl-carboxybenzoat | 18,4 |
| 3-Fluor-4-cyanophenyl-4'-trans-pentylcyclohexylphenyl-carboxybenzoat | 4,7 |

**9.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 23,1 |
| 4-Heptyl-4'-cyanobiphenyl | 16,1 |
| 4-Cyanophenyl-4'-ethylbenzoat | 7,2 |
| 4-Cyanophenyl-4'-propylbenzoat | 7,2 |
| 4-Cyanophenyl-4'-butylbenzoat | 13,1 |
| 4-Cyanophenyl-4'-pentylbenzoat | 14,5 |
| 3-Fluor-4-cyanophenyl-4'-pentylphenylbenzoat | 12,6 |
| 3-Fluor-4-cyanophenyl-4'-trans-pentylcyclohexylphenyl-carboxybenzoat | 6,2 |

**10.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 23,7 |
| 4-Heptyl-4'-cyanobiphenyl | 16,5 |
| 3-Fluor-4-cyanophenyl-4'-ethylbenzoat | 6,9 |
| 3-Fluor-4-cyanophenyl-4'-propylbenzoat | 6,9 |
| 3-Fluor-4-cyanophenyl-4'-butylbenzoat | 12,8 |
| 3-Fluor-4-cyanophenyl-4'-pentylbenzoat | 13,9 |
| 4-Cyanobiphenyl-4'-pentylbenzoat | 13,2 |
| 3-Fluor-4-cyanophenyl-4'-trans-pentylcyclohexylphenyl-carboxybenzoat | 6,1 |

**11.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 21,8 |
| 4-Heptyl-4'-cyanobiphenyl | 15,2 |
| 3-Fluor-4-cyanophenyl-4'-ethylbenzoat | 7,3 |
| 3-Fluor-4-cyanophenyl-4'-propylbenzoat | 7,3 |
| 3-Fluor-4-cyanophenyl-4'-butylbenzoat | 13,3 |
| 3-Fluor-4-cyanophenyl-4'-pentylbenzoat | 14,7 |
| 3-Fluor-4-cyanophenyl-4'-pentylphenylbenzoat | 13,7 |

(fortgesetzt)

| | Massen-% |
|---|---|
| 4-Pentyl-trans-cyclohexylbenzoat-4'-phenylcarboxylat von 4-Cyano-3-fluorbenzol | 6,7 |

**12.** Verwendung nach Anspruch 1, **dadurch gekennzeichnet, dass** die Mischung der folgenden Zusammensetzung entspricht:

| | Massen-% |
|---|---|
| 4-Ethyl-4'-cyanobiphenyl | 8,5 |
| 4-Butyl-4'-cyanobiphenyl | 4,2 |
| 4-Pentyl-4'-cyanobiphenyl | 29,8 |
| 4-Pentyl-4'-cyanoterphenyl | 3,5 |
| 3-Fluor-4-cyanophenyl-4'-ethylbenzoat | 8 |
| 3-Fluor-4-cyanophenyl-4'-butylbenzoat | 16 |
| 3-Fluor-4-cyanophenyl-4'-pentylbenzoat | 8 |
| 3-Fluor-4-cyanophenyl-4'-trans-pentylphenylbenzoat | 14 |
| 3-Fluor-4-cyanophenyl-4'-trans-pentylcyclohexylbenzoat | 4 |
| 3-Fluor-4-cyanophenyl-4'-trans-cyclohexylcarboxybenzoat | 4 |

**13.** Verwendung nach Anspruch 1, **dadurch gekennzeichnet, dass** die Mischung der folgenden Zusammensetzung entspricht:

| | Massen-% |
|---|---|
| 4-Ethyl-4'-cyanobiphenyl | 12,2 |
| 4-Propyl-4'-cyanobiphenyl | 7,0 |
| 4-Pentyl-4'-cyanobiphenyl | 29,2 |
| 4-Heptyl-4'-cyanobiphenyl | 15,9 |
| 4-(5-Propyl-[1.3]dioxan-2-yl)cyanobenzol | 6,7 |
| 4-(5-Pentyl-[1.3]dioxan-2-yl)cyanobenzol | 10,7 |
| 4,4'-Bis(4-propylcyclohexyl)-3-fluorbiphenyl | 4,2 |
| 4,4'-Bis(4-propylcyclohexyl)biphenyl | 6,1 |
| 4'-(4-Pentylcyclohexyl)-4-(4-propylcyclohexyl)biphenyl | 8,0 |

**14.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 23,2 |
| 4-Heptyl-4'-cyanobiphenyl | 16,1 |
| 3-Fluor-4-cyanophenyl-4'-ethylbenzoat | 7,2 |
| 3-Fluor-4-cyanophenyl-4'-propylbenzoat | 7,2 |
| 3-Fluor-4-cyanophenyl-4'-butylbenzoat | 13,2 |
| 3-Fluor-4-cyanophenyl-4'-pentylbenzoat | 14,5 |
| 4-Cyanobiphenyl-4'-pentylbenzoat | 12,7 |
| 4,4'-Bis(4-propylcyclohexyl)biphenyl | 5,9 |

**15.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 22,6 |
| 4-Heptyl-4'-cyanobiphenyl | 15,7 |
| 3-Fluor-4-cyanophenyl-4'-ethylbenzoat | 7,3 |
| 3-Fluor-4-cyanophenyl-4'-propylbenzoat | 7,3 |
| 3-Fluor-4-cyanophenyl-4'-butylbenzoat | 13,2 |
| 3-Fluor-4-cyanophenyl-4'-pentylbenzoat | 14,7 |
| 3-Fluor-4-cyanophenyl-4'-pentyl-5-phenylbenzoat | 13,2 |
| 4,4'-Bis(4-propylcyclohexyl)biphenyl | 6,0 |

**16.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 23,8 |
| 4-Heptyl-4'-cyanobiphenyl | 16,5 |
| 3-Fluor-4-cyanophenyl-4'-ethylbenzoat | 7,2 |
| 3-Fluor-4-cyanophenyl-4'-propylbenzoat | 7,2 |
| 3-Fluor-4-cyanophenyl-4'-butylbenzoat | 13,3 |
| 3-Fluor-4-cyanophenyl-4'-pentylbenzoat | 14,5 |
| 3-Fluor-4-cyanophenyl-4'-pentylphenylbenzoat | 11,6 |
| 4,4'-Bis(4-propylcyclohexyl)biphenyl | 5,9 |

**17.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 13,0 |
| 4-Heptyl-4'-cyanobiphenyl | 13,0 |
| 3-Fluor-4-cyanophenyl-4'-ethylbenzoat | 6,3 |
| 3-Fluor-4-cyanophenyl-4'-propylbenzoat | 10,8 |
| 3-Fluor-4-cyanophenyl-4'-butylbenzoat | 12,1 |
| 3-Fluor-4-cyanophenyl-4'-pentylbenzoat | 12,1 |
| 4-Pentylphenyl-4'-pentylcyclohexylcarboxylat | 14,0 |
| 4-Cyanophenyl-4'-trans-butylcyclohexylbenzoat | 8,6 |
| 3-Fluor-4-cyanophenyl-4'-trans-pentylcyclohexylbenzoat | 4,2 |
| 4,4'-Bis(4-propylcyclohexyl)-3-fluorbiphenyl | 3,9 |
| 4,4'-Bis(4-propylcyclohexyl)biphenyl | 2,7 |

**18.** Verwendung nach Anspruch 1, **dadurch gekennzeichnet, dass** die Mischung der folgenden Zusammensetzung entspricht:

| | Massen-% |
|---|---|
| 4-Pentyl-4'-cyanobiphenyl | 14,3 |
| 4-Heptyl-4'-cyanobiphenyl | 10,4 |
| 3-Fluor-4-cyanophenyl-4'-ethylbenzoat | 3,0 |
| 3-Fluor-4-cyanophenyl-4'-propylbenzoat | 4,9 |
| 3-Fluor-4-cyanophenyl-4'-butylbenzoat | 5,8 |

(fortgesetzt)

| | Massen-% |
|---|---|
| 3-Fluor-4-cyanophenyl-4'-pentylbenzoat | 6,4 |
| 4-Pentyl-trans-cyclohexylbenzoat-4'-phenylcarboxylat von 4-Cyano-3-fluorbenzol | 5,4 |
| 4-Pentylphenyl-4'-propylcyclohexylcarboxylat | 8,4 |
| 4-Pentylphenyl-4'-pentylcyclohexylcarboxylat | 5,2 |
| 4-Pentylphenyl-4'-propylphenylcarboxylat | 12,1 |
| 4-Pentylphenyl-4'-pentylphenylcarboxylat | 7,5 |
| 4,4'-Bis(4-propylcyclohexyl)biphenyl | 4,2 |
| 4-Propylcyclohexyl-4'-pentylcyclohexylbiphenyl | 4,1 |
| 4-Propylphenylethinyl-4'-butylphenyl | 4,1 |
| 4-Hexylcarboxyphenylethinyl-4'-hexylcarboxylphenyl | 4,2 |

**19.** Bistabile Anzeigevorrichtung mit Verankerungsbruch, die eine nematische Flüssigkristallmischung mit schwacher zenitaler Verankerungsenergie verwendet, **dadurch gekennzeichnet, dass** die Flüssigkristallmischung umfasst:

a) mindestens 40 Massen-% an Verbindungen mit starker molekularer Polarisierbarkeit ($\Delta\varepsilon_r$>10) und starkem Dipolmoment ($\mu$>1D), die jedoch eine schwache zenitale Verankerung aufweisen und aus den Verbindungen der Formel (AI, AII, AIII und AIV), die folgen, ausgewählt sind:

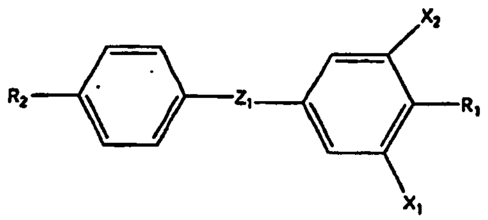

AI

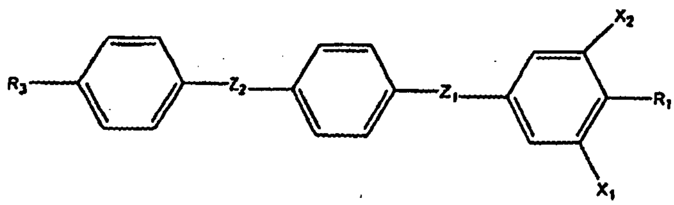

AII

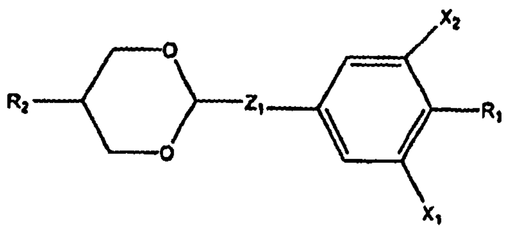

AIII

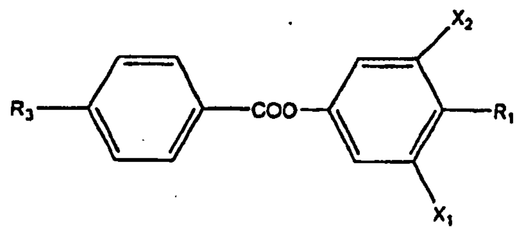

AIV

worin:

- $R_1$ eine polare Gruppe -CN, -NCS, -F oder $-CF_3$ ist,
- $R_2$ eine Gruppe R-, RO- oder RCOO- ist, worin R eine Alkylkette mit 1 bis 12 Kohlenstoffatomen darstellt,
- $R_3$ eine Gruppe R-, RO- oder RCOO- ist, worin R eine Alkylkette mit 1 bis 12 Kohlenstoffatomen oder einen cycloaliphatischen Rest darstellt, der gegebenenfalls eine Alkylkette mit 1 bis 12 Kohlenstoffatomen trägt,
- $Z_1$ und $Z_2$, identisch oder verschieden, die Gruppen -C≡C-, $-CH_2-CH_2-$, -COO-, -OCO- oder Einfachbindungen sind
- und $X_1$ und $X_2$, identisch oder verschieden, Fluor-, Chlor- oder Wasserstoffatome sind,

b) höchstens etwa 50 % an Verbindungen mit schwacher Verankerung, die ausgewählt sind aus den Verbindungen der Formel (BI, BII, EI, EII, FI und FII), die folgen:

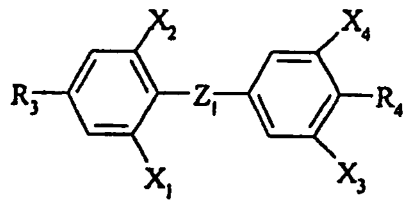

BI

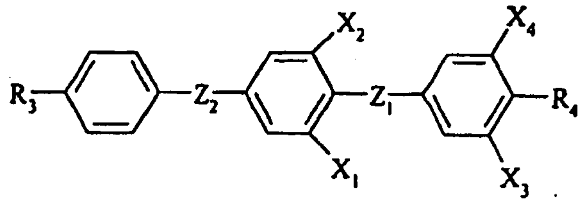

BII

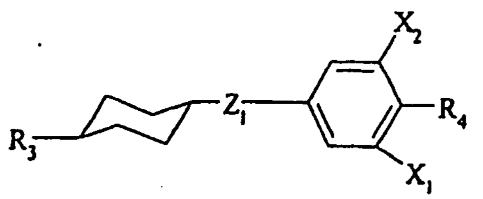

EI

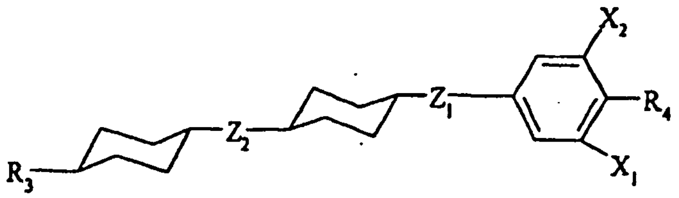

EII

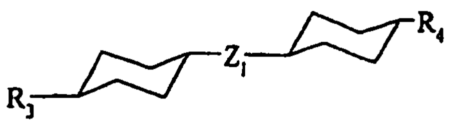

FI

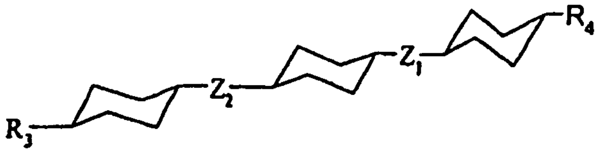

FII

worin:

$R_3$ und $R_4$, identisch oder verschieden, Gruppen R-, RO- oder RCOO- sind, worin R eine Alkylkette mit 1 bis 12 Kohlenstoffatomen oder ein cycloaliphatischer Rest ist, der gegebenenfalls eine Alkylkette mit 1 bis 12 Kohlenstoffatomen trägt,
$Z_1$ und $Z_2$, identisch oder verschieden, Gruppen -C≡C, $-CH_2-CH_2-$, -COO-, -OCO- oder Einfachbindungen sind,
$X_1$ und $X_2$, identisch oder verschieden, Fluor-, Chlor- oder Wasserstoffatome sind,
$X_3$ und $X_4$, identisch oder verschieden, Wasserstoff- oder Halogen-, insbesondere Fluor- oder Chloratome, oder Gruppen R- oder ROsind, worin R eine Alkylkette mit 1 bis 12 Kohlenstoffatomen, ist,

c) höchstens etwa 20 Massen-% an Verbindungen, die Dipole enthalten und ausgewählt sind aus den Verbindungen der Formel (CI und CII), die folgen:

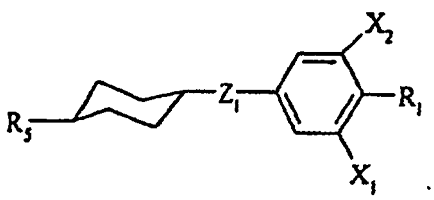

CI

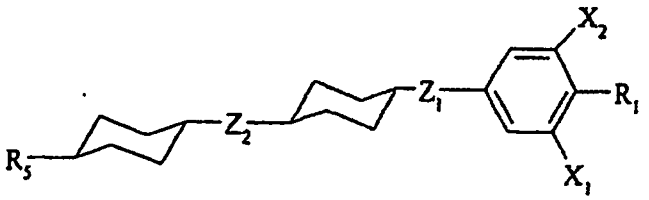

CII

worin

$R_1$ eine polare Gruppe -CN, -NCS, -F oder $-CF_3$ ist,
$R_5$ eine Gruppe R- oder RCOO- ist, worin R eine Alkylkette mit 1 bis 12 Kohlenstoffatomen darstellt,
$Z_1$ und $Z_2$, identisch oder verschieden, Gruppen -C≡C-, $-CH_2-CH_2-$, -COO-, -OOC- oder Einfachbindungen sind und
$X_1$ und $X_2$, identisch oder verschieden, Fluor-, Chlor- oder Wasserstoffatome sind,

d) höchstens etwa 5 Massen-% an Verbindung der Formel DI und DII:

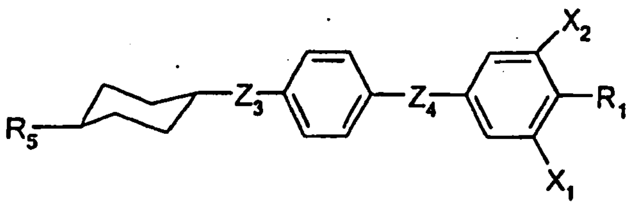

DI

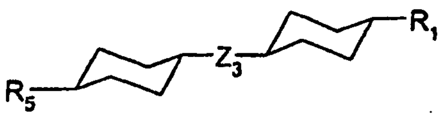

DII

worin

$R_1$ eine polare Gruppe -CN, -NCS, -F oder $-CF_3$ ist,
$R_5$ eine Gruppe R- oder RCOO- ist, worin R eine Alkylkette mit 1 bis 12 Kohlenstoffatomen darstellt,
$Z_3$ und $Z_4$, identisch oder verschieden, Gruppen -C≡C-, $-CH_2-CH_2-$ oder Einfachbindungen sind und
$X_1$ und $X_2$, identisch oder verschieden, Fluor-, Chlor- oder Wasserstoffatome sind,

wobei die relativen Anteile an vorstehend genannten Verbindungen, welche in die Zusammensetzung der nematischen Flüssigkristallmischung eingehen, so bestimmt sind, dass man gleichzeitig die folgenden physikalischen Charakteristika der Mischung erhält:

- eine Übergangstemperatur nematisch - isotrope Flüssigkeit ($T_{N-1}$) der Flüssigkristallmischung größer oder gleich +50°C,
- einen nematischen Bereich $\Delta T_N$ der Flüssigkristallmischung größer oder gleich 50°C,
- eine positive dielektrische Anisotropie von mehr als oder gleich $8.10^{-11}$ F/m (Wert gemessen bei der Temperatur +20°C),
- eine schwache zenitale Verankerung auf mindestens einer der Platten der bistabilen Anzeige,

**gekennzeichnet durch** eine Bruchspannung $U_{\lambda/2}$ < 25 Volt bei einer Zelle mit einer Dicke *d* entsprechend $\Delta n\ d$ = 295 nm, wobei der Wert bei einer Temperatur von +20°C gemessen ist.

**20.** Bistabile Anzeigevorrichtung nach Anspruch 19, **dadurch gekennzeichnet, dass** in dieser Vorrichtung das Display eine Vorrichtung ist, die zwei Strukturen verwendet, eine gleichförmige oder schwach gedrehte, in der die Moleküle mindestens ungefähr untereinander parallel sind, und eine andere, die sich von der Erstgenannten durch eine Verdrehung in der Größenordnung von +/- 180° unterscheidet, wobei die Umschaltung zwischen den beiden Strukturen durch einen Ankerbruch auf mindestens einem der Substrate stattfindet.

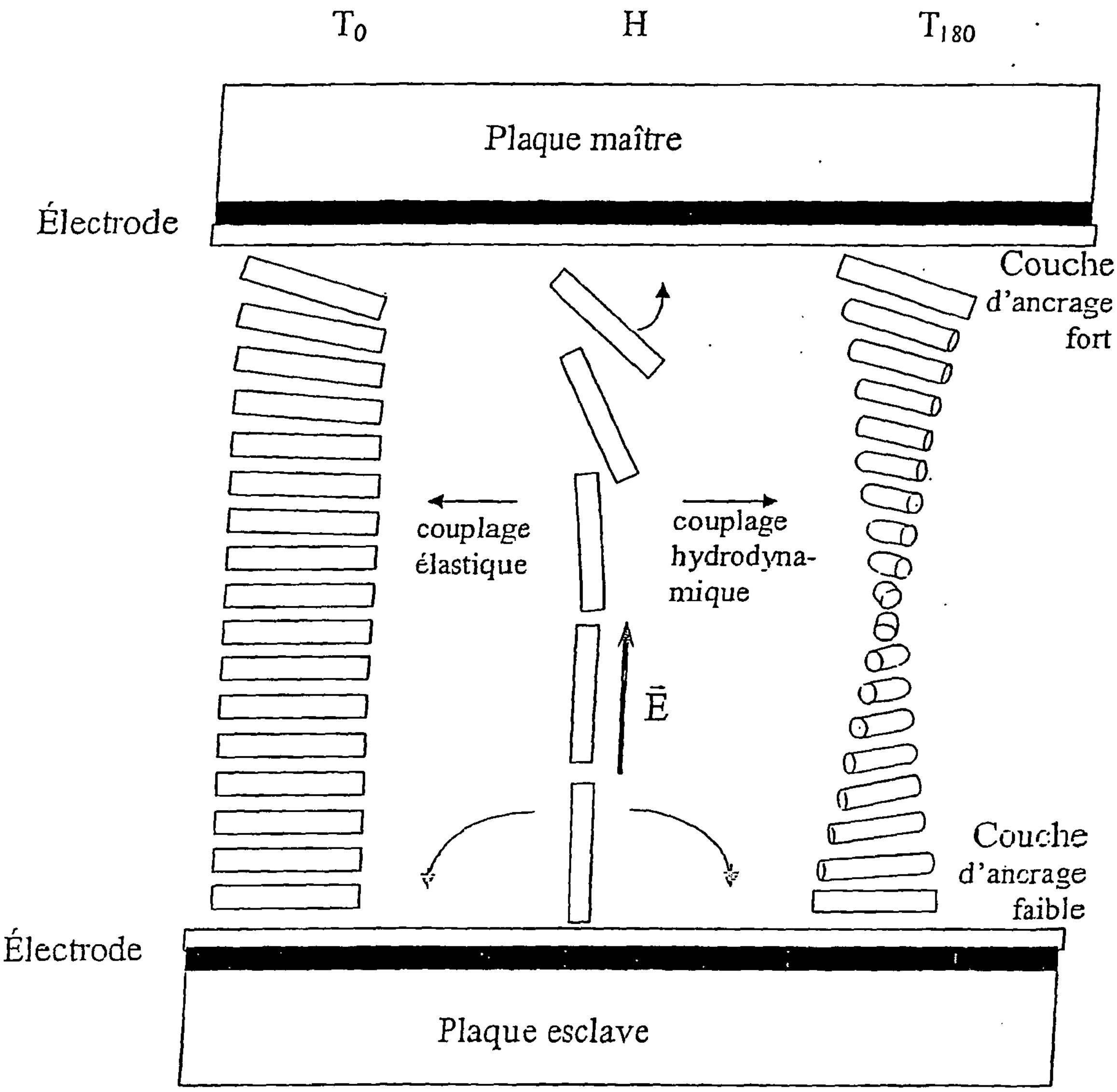
T0
H
T180
Plaque maître
Électrode
Couche d'ancrage fort
couplage élastique
couplage hydrodyna-mique
E
Couche d'ancrage faible
Électrode
Plaque esclave

FIGURE 1

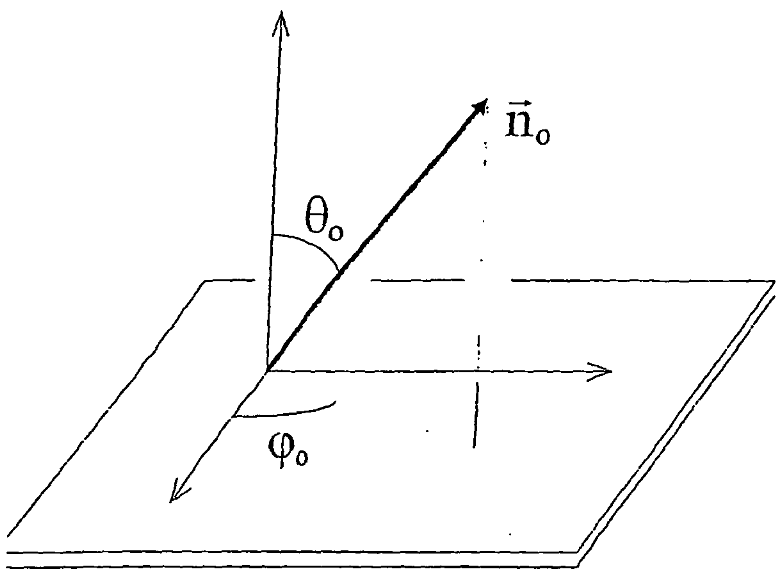


FIGURE 2

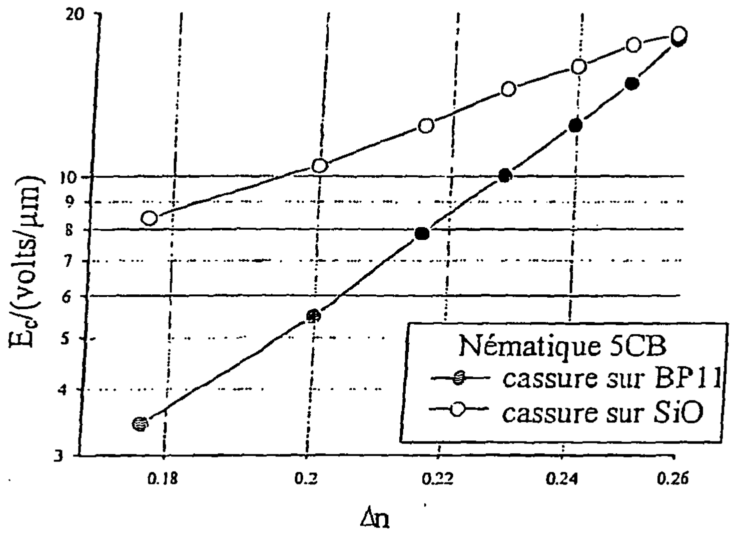
20
10
9
8
7
6
5
4
3
0.18
0.2
0.22
0.24
0.26
Δn
$E_c$/(volts/μm)
Nématique 5CB
cassure sur BP11
cassure sur SiO

FIGURE 3